# EUROPEAN PATENT SPECIFICATION

(11) **EP 4 616 568 B1**
(45) Date of publication and mention of the grant of the patent: **26.08.2026**
(21) Application number: 23790309.1
(22) Date of filing: 16.10.2023
(51) Int. Cl.: H04L 9/32, H04L 9/00

(54) **BLOCKCHAIN TRANSACTION**
BLOCKCHAIN-TRANSAKTION
TRANSACTION DE CHAÎNE DE BLOCS

(30) Priority: 10.11.2022 GB 202216741
(43) Date of publication of application: 17.09.2025
(73) Proprietor: nChain Licensing AG, 6300 Zug (CH)
(72) Inventor: DUCROUX, Mathieu, London W1W 8AP (GB); ZHANG, Wei, London W1W 8AP (GB)
(74) Representative: Page White Farrer
(86) International application number: PCT/EP2023/078649
(87) International publication number: WO 2024/099693

(56) References cited:
- GB-A- 2 596 096
- US-A1- 2021 344 510
- US-A1- 2022 321 360

## Description

### TECHNICAL FIELD

The present disclosure relates to a method for generating a challenge blockchain transaction and a method for generating a solution blockchain transaction for unlocking a UTXO of the challenge transaction.

### BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

US2021/344510A1 discloses providing a blockchain transaction comprising a public key combination verification function. The blockchain transaction is configured to be redeemable to permit access to, or transfer control of, a resource by providing to the blockchain transaction an input comprising: a plurality of public keys; a gradient value (k) related to two of the plurality of public keys; and a group public key derived from a combination of the public keys and the gradient value (λ). The blockchain transaction is configured to apply the public key verification function to the input to verify, upon successful redemption of the transaction, that the group public key is derived from the combination of the plurality of public keys.

### SUMMARY

In UTXO-based blockchains, the solution to a cryptographic puzzle can be set as a spending condition to a transaction, which may be referred to as a *bounty transaction. A puzzle bounty* locked inside the bounty transaction can be claimed by broadcasting a *redemption transaction* that references the bounty transaction and contains the puzzle solution. The verification of the solution is performed by blockchain nodes (e.g. miners) as part of the transaction verification.

One common problem with puzzle bounties is that a malicious interceptor can steal the bounty by extracting the puzzle solution from the redemption transaction and broadcasting a new redemption transaction with a modified output. In order to solve this problem, the creator of the bounty transaction, referred to as the *challenger,* may require the redemption transaction to be signed by some specific user. In some cases, though, it may be desirable that the puzzle bounty is not tied to a particular user but can be claimed by anyone who provides the correct puzzle solution.

According to one aspect disclosed herein, there is provided a computer-implemented method for generating a challenge blockchain transaction, wherein the challenge blockchain transaction is associated with a puzzle and a proof criterion, wherein the puzzle is satisfied by a puzzle solution, and wherein the proof criterion is satisfied by a proof, the method comprising: generating a first locking script of the challenge blockchain transaction which, when executed with a first unlocking script of a solution blockchain transaction comprising a candidate puzzle solution, a public key, a candidate proof, and a signature generated for the solution blockchain transaction is configured to: verify that the candidate puzzle solution satisfies the puzzle; verify that the signature is valid for the public key; and verify that the candidate proof satisfies the proof criterion, wherein the proof criterion requires that the candidate proof is derived from the candidate puzzle solution and the public key; and making the challenge blockchain transaction available to one or more nodes of a blockchain network.

According to another aspect disclosed herein, there is provided a computer-implemented method for generating a solution blockchain transaction, wherein a first unlocking script of the solution blockchain transaction is configured to unlock a first transaction output of a challenge blockchain transaction, wherein the challenge blockchain transaction is associated with a puzzle and a proof criterion, wherein the puzzle is satisfied by a puzzle solution, and wherein the proof criterion is satisfied by a proof, the method comprising: generating the first unlocking script, wherein the first unlocking script comprises: a candidate puzzle solution for satisfying the puzzle; a signature of the solution blockchain transaction; a public key for generating the signature; and a candidate proof, wherein the candidate proof is derived from the candidate puzzle solution and the public key; and making the solution blockchain transaction available to one or more nodes of a blockchain network.

The method provided herein secures a puzzle bounty by preventing malicious interceptors from hijacking the puzzle solution provided in a redemption transaction by way of the requirement for the candidate proof to be derived from the public key used to sign the redemption (or solution) transaction and the puzzle solution.

In some embodiments provided herein, the candidate proof is generated by a method which takes a significant time to compute. The time taken to compute the candidate proof is significant in comparison to an average time taken for a transaction to be recorded in a block of the blockchain. In this way, a malicious interceptor of the solution blockchain transaction is unable to generate their own candidate proof before the solution blockchain transaction is recorded to the blockchain, thus preventing the malicious interceptor from maliciously obtaining the bounty (i.e. the digital asset) locked by the output of the challenge transaction.

One advantage of the methods provided herein is that the challenger does not need to know the puzzle solution when the challenge blockchain transaction is generated. This reduces the computational and time requirements of the challenger when generating the challenge solution.

### BRIEF DESCRIPTION OF THE DRAWINGS

To assist understanding of embodiments of the present disclosure and to show how such embodiments may be put into effect, reference is made, by way of example only, to the accompanying drawings in which:
Figure 1 is a schematic block diagram of a system for implementing a blockchain;
Figure 2 schematically illustrates some examples of transactions which may be recorded in a blockchain;
Figure 3 provides an example directed acyclic graph with labelled nodes;
Figure 4 provides an example method for generating challenge and solution blockchain transactions;
Figure 5 schematically illustrates verifying an unlocking script using a proof of work scheme;
Figure 6 schematically illustrates verifying an unlocking script using a chained proof of work scheme;
Figure 7 schematically illustrates verifying an unlocking script using a Sloth scheme;
Figure 8 schematically illustrates verifying an unlocking script using a proof of sequential work scheme; and
Figure 9 schematically illustrates verifying an unlocking script using a verifiable delay function scheme.

### DETAILED DESCRIPTION OF EMBODIMENTS

### 1. EXAMPLE SYSTEM OVERVIEW

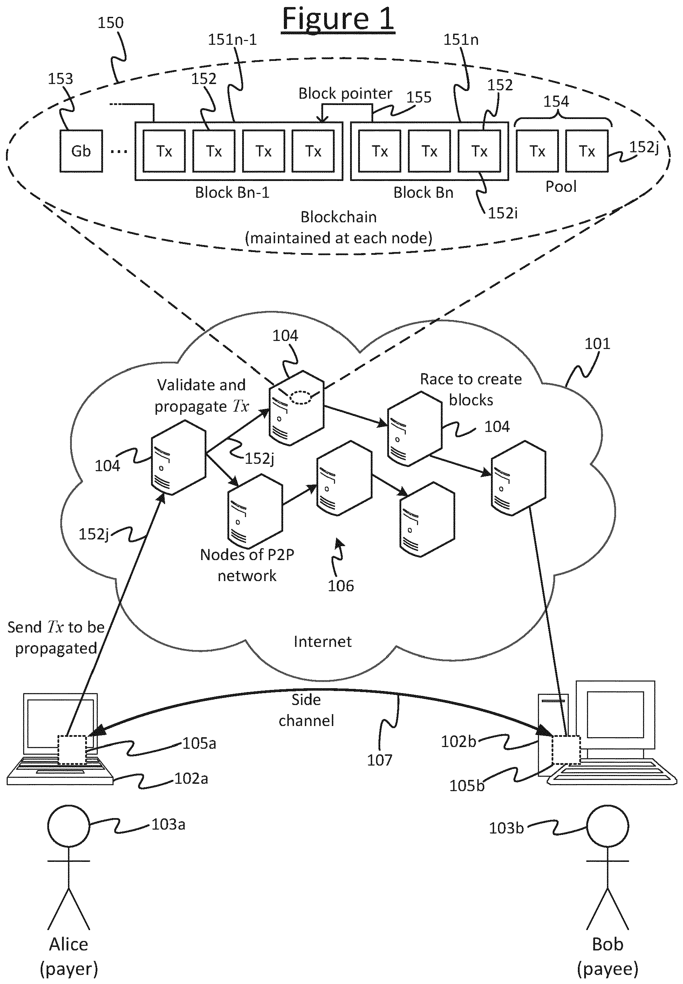

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. Spending or redeeming does not necessarily imply transfer of a financial asset, though that is certainly one common application. More generally spending could be described as consuming the output, or assigning it to one or more outputs in another, onward transaction. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction spends (or "assigns"), wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (or "spent") is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it spends or assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### 2. UTXO-BASED MODEL

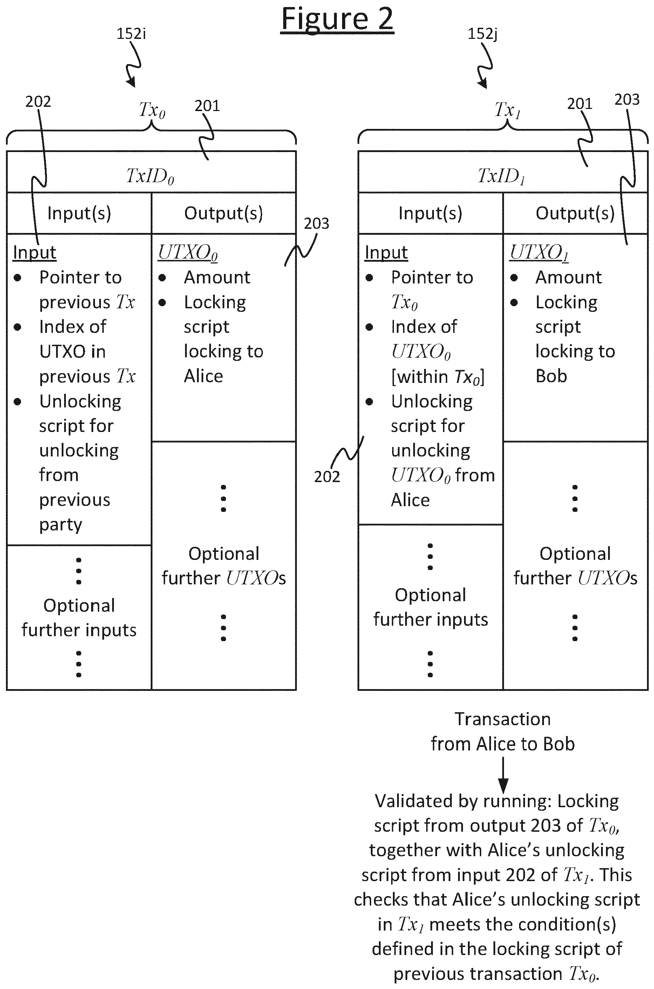

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled *"Tx₁".* It takes an amount of the digital asset that is locked to Alice in the output 203 of a preceding transaction 152i in the sequence, and transfers at least some of this to Bob. The preceding transaction 152i is labelled *"Tx₀"* in Figure 2. *Tx₀* and *Tx₁* are just arbitrary labels. They do not necessarily mean that *Tx₀* is the first transaction in the blockchain 151, nor that *Tx₁* is the immediate next transaction in the pool 154. *Tx₁* could point back to any preceding (i.e. antecedent) transaction that still has an unspent output 203 locked to Alice.

The preceding transaction *Tx₀* may already have been validated and included in a block 151 of the blockchain 150 at the time when Alice creates her new transaction *Tx₁,* or at least by the time she sends it to the network 106. It may already have been included in one of the blocks 151 at that time, or it may be still waiting in the ordered set 154 in which case it will soon be included in a new block 151. Alternatively *Tx₀* and *Tx₁* could be created and sent to the network 106 together, or *Tx₀* could even be sent after *Tx₁* if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* comprises a particular UTXO, labelled here *UTXO₀.* Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* comprises a locking script [Checksig *P_{A}*] which requires a signature Sig *P_{A}* of Alice in order for *UTXO₀* to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* comprises a pointer pointing back to *Tx₁* (e.g. by means of its transaction ID, *TxID₀,* which in embodiments is the hash of the whole transaction *Tx₀*). The input 202 of *Tx₁* comprises an index identifying *UTXO₀* within *Tx₀,* to identify it amongst any other possible outputs of *Tx₀.* The input 202 of *Tx₁* further comprises an unlocking script <Sig *P_{A}*> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:
<Sig *P_{A}> <P_{A}>* ∥ [Checksig *P_{A}*]
where "∥" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key *P_{A}* of Alice, as included in the locking script in the output of *Tx₀,* to authenticate that the unlocking script in the input of *Tx₁* contains the signature of Alice signing the expected portion of data. The expected portion of data itself (the "message") also needs to be included in order to perform this authentication. In embodiments the signed data comprises the whole of *Tx₁* (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in *Tx₁* meets the one or more conditions specified in the locking script of *Tx₀* (so in the example shown, if Alice's signature is provided in *Tx₁* and authenticated), then the blockchain node 104 deems *Tx₁* valid. This means that the blockchain node 104 will add *Tx₁* to the ordered pool of pending transactions 154. The blockchain node 104 will also forward the transaction *Tx₁* to one or more other blockchain nodes 104 in the network 106, so that it will be propagated throughout the network 106. Once *Tx₁* has been validated and included in the blockchain 150, this defines *UTXO₀* from *Tx₀* as spent. Note that *Tx₁* can only be valid if it spends an unspent transaction output 203. If it attempts to spend an output that has already been spent by another transaction 152, then *Tx₁* will be invalid even if all the other conditions are met. Hence the blockchain node 104 also needs to check whether the referenced UTXO in the preceding transaction *Tx₀* is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in *UTXO₀* in *Tx₀* can be split between multiple UTXOs in *Tx₁.* Hence if Alice does not want to give Bob all of the amount defined in *UTXO₀,* she can use the remainder to give herself change in a second output of *Tx₁,* or pay another party.

In practice Alice will also usually need to include a fee for the bitcoin node 104 that successfully includes her transaction 104 in a block 151. If Alice does not include such a fee, *Tx₀* may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to *UTXO₀* is the only input to *Tx₁,* and *Tx₁* has only one output *UTXO₁.* If the amount of the digital asset specified in *UTXO₀* is greater than the amount specified in *UTXO₁,* then the difference may be assigned (or spent) by the node 104 that wins the proof-of-work race to create the block containing *UTXO₁.* Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key *P_{A}.* In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

### 3. SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

### 4. HASH PUZZLES

Cryptographic hash functions provide a means of deterministically obscuring an input where a small change in the input leads to a dramatic change in the output. Cryptographic hash functions have the following properties:
- *pre-image resistance:* given a hash value H(m), it is computationally difficult to find the pre-image m.
- *second pre-image resistance:* given a hash value H(m) and its pre-image m, it is computationally difficult to find m' such that *H*(*m'*) = H(m).
- *collision resistance:* it is computationally difficult to find a pair of messages m, m' such that H(m) = H(m').

In UTXO-based blockchains, the solution to a cryptographic puzzle can be set as a spending condition to a transaction, which may be referred to as a *bounty transaction.* The *puzzle bounty* locked inside the bounty transaction can be claimed by broadcasting a *redemption transaction* that references the bounty transaction and contains the puzzle solution. The verification of the solution is performed by miners as part of the transaction verification.

One of the most prolific types of cryptographic puzzles in blockchain applications is the *hash puzzle.* Hash puzzles can be used to lock a bounty inside some transaction. The bounty can be claimed by providing the preimage m of some hash value H(m). The pre-image m is not necessarily known by the creator of the bounty transaction.

The locking script of a bounty transaction locked by a hash puzzle would be as follows:
Locking script:
OP_HASH256 <H(m)> OP_EQUAL

As such, the unlocking script of the redemption transaction would be:
Unlocking script:
<m>

A malicious party who intercepts this redemption transaction can create a new redemption transaction containing the hash puzzle solution m with an output directed to its own address, and then propagate it throughout the network. If this second redemption transaction gets accepted by the network before the first one, the interceptor would thus steal the bounty from the legitimate solver.

This vulnerability can be rectified by requiring the redemption transaction to contain a digital signature from the intended recipient with public key *P_{A}*, along with the hash puzzle solution. The locking script would be constructed as:
Locking script:
OP_HASH256 <H(m)> OP_EQUALVERIFY OP_DUP OP_HASH160 <*H*(*P_{A}*)> OP_EQUALVERIFY OP_CHECKSIG

And the unlocking script of the corresponding redemption transaction would have to be:
Unlocking script:
*<sig_{PA}> <P_{A}> <m>*

However, this construction restricts who is able to redeem the puzzle bounty to the owner of the public key *P_{A}*. In some cases, it is desirable for anyone to be able to claim the hash bounty by providing the pre-image of the hash.

A problem, thus, arises in ensuring that the first user to broadcast the solution to the puzzle receives the bounty, including the case when the solution is not known by the challenger.

It will be appreciated that the term "bounty" as used herein is not limited to a digital currency but may include any lockable transaction output.

### 5. PROOF OF SEQUENTIAL COMPUTATION

A proof of sequential computation is a proof that can be computed in a prescribed amount of time N, but not (significantly) faster, even when having access to a large amount of parallel hardware. The proof should be easy to verify by anyone without having to interact with a trusted third party, ideally in time polylog(N).

The time measures an amount of sequential work, that is work that cannot be performed faster by distributing the computation to multiple parallel cores. When the hardware of users is known, a proof of sequential computation can be used as a proof that a certain amount of time has passed. If the speed of users is not known, a lower bound can be estimated based on the latest hardware capabilities.

The following subsections describe three types of proofs of sequential computation: Sloth (section 5.1), Proof of Sequential Work (PoSW) (section 5.2), and Verifiable Delay Function (VDF) (section 5.3).

### 5.1 SLOTH

This first construction for a proof of sequential computation is based on the problem of extracting modular square roots in ${ℤ}_{p}^{∗}$*.* Given a challenge $x ∈ {ℤ}_{p}^{∗}$*,* with p ≡ 3 mod 4, computing $y = \sqrt{x} = {x}^{\frac{p + 1}{4}}$ mod p can be efficiently verified by anyone using one squaring operation *y*² = x mod p. There is no known algorithm for computing modular exponentiation in time sublinear in the bit-length of the exponent. However, the difficulty of the puzzle is limited to *O*(log *p*) as the exponent can be reduced modulo p - 1 before doing the computation. Producing a difficult puzzle thus requires the use of a very large prime p, however it also introduce the opportunity for parallelising multiplication in ${ℤ}_{p}^{∗}$ for up to O(logp) speedup.

To overcome this limitation, it is possible to chain a series of square root computations in ${ℤ}_{p}^{∗}$ interleaved with a simple permutation in a construction, referred to as *Sloth.* The chain can only be evaluated sequentially, and the difficulty is linear in the length of the chain. Therefore, Sloth gives to opportunity to create proofs of sequential computation whose difficulty can be made arbitrarily large but also depends on the amount of data storage available.

More specifically, let p ≡ 3 mod 4 be a prime number. It follows that for any $x ∈ {ℤ}_{p}^{∗}$ precisely one of *x* or *-x* is a square, and a square root can be calculated by raising the square to the power $\frac{p + 1}{4}$. If y is a square root of a square $x ∈ {ℤ}_{p}^{∗}$*,* then y and -y are the only two square roots of *x.* We define $\sqrt[+]{x}$ as the unique, even square root *of x* and $\sqrt[-]{x}$ as the unique, odd square root of x. The parity of an element y is defined as the integer parity of the unique ŷ such that ŷ = y mod p.

The chain in Sloth is computed by iterating the permutation *τ = ρ* o *σ*, where o is the composition operator. The permutation *ρ* is defined as follows: $ρ \left(x\right) : = \left\{\begin{matrix}\sqrt[+]{x} , & if x is a quadratic residue \\ \sqrt[-]{- x} , & otherwise\end{matrix}\right. ,$ with inverse: ${ρ}^{- 1} \left(y\right) : = \left\{\begin{matrix}+ {y}^{2} , & if \hat{y} is even \\ - {y}^{2} , & if \hat{y} is odd\end{matrix}.\right.$

Iterating the permutation *ρ* allows a shortcut in the computation of *ρ^{L},* where *L* is the length of the chain. This shortcut first computes $v = {\left(\frac{p + 1}{4}\right)}^{L}$ mod p and then the single exponentiation *x^{v}*, thus requiring only *O*(log *p*) multiplications to evaluate the chain. This can be avoided by adding a layer of unstructured confusion using the permutation *σ* = *σ*⁻¹ that simply swaps neighbours as follows: $σ \left(x\right) : = \left\{\begin{matrix}x + 1 , & if x is odd \\ x - 1 , & if x is even\end{matrix}.\right.$

The verification of each step in the chain requires a single multiplication over ${ℤ}_{p}^{*}$ compared to *O*(log *p*) multiplication required for the evaluation. The gap between the computation and the verification of a chain in Sloth is therefore *O*(log *p*). Increasing the size of*p* amplifies this gap, however it also introduces an opportunity for parallelizing multiplication in ${ℤ}_{p}^{*}$.

### 5.2 PROOF OF SEQUENTIAL WORK

The proof of sequential computation described in the previous subsection is not asymptotically efficiently verifiable: the verification of a Sloth chain is faster than the evaluation procedure only by a constant factor O(logp). In the following, *proofs of sequential work* (PoSW) are described which achieve an exponential gap between evaluation and verification.

A PoSW enables a verifier V to efficiently check that a prover 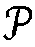 has spent a given amount of sequential work after receiving some statement *χ*.

PoSW are easiest to define and prove secure in the *random oracle model* (ROM), as here it is possible to identify a (potentially parallel) query to a *random oracle* (RO) as one time step. It is assumed that both the prover 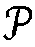 and the verifier *V* have access to the random oracle 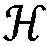 : {0,1}* → {0,1}*^{W}*.

The notion of sequentiality in PoSW defined in the ROM relies on the computation of 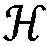 -*sequences,* for a random oracle 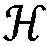 *.* An 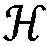 -sequence of length *L* is a sequence *x*₁, ... , *x_{L}* ∈ {0,1}* where for each i, 1 ≤ *i < L,* 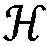 (*xᵢ*) is contained in *x*_{*i*+1} as a continuous substring, i.e. *x*_{*i*+1} *= a*∥ 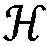 (*xᵢ*)∥*b* for some *a, b* ∈ {0,1}*. Whenever an adversary outputs an 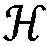 -sequence of length *L* (for *L* much smaller than 2*^{w}*, which would be the case in practice if a standard block length w = 256 is used), then it can be assumed that it made at least L sequential queries to 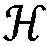 *.* 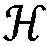 is assumed to be collision resistant.

A PoSW in the ROM model consists of the following quadruple of algorithms.
- SETUP(1*^{λ}*) → pp: takes a security parameter *λ* and produces the public parameters $pp = \left(w, k\right) ∈ {ℕ}^{2}$.
- EVAL(*pp*, *χ*, *T)* → (*ϕ,* 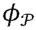 ): take as input a statement *χ* ∈ 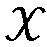 *,* a time parameter $T ∈ ℕ$, and output a commitment *ϕ* ∈ 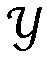 after having computed some 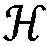 -sequence of length T. Additionally, some extra information 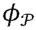 ∈ {0,1}* is produced and stored locally in order to be used in the OPEN algorithm.
- OPEN(*pp*, 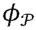 , *γ*, *T)* → *π*: takes the challenge vector *γ* = (*γ*₁, ... , *γₖ*) and the locally stored information 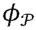 as inputs and sends a proof vector *π* = (*π*₁, ... , *πₖ*) ∈ {0,1}* to *V.*
- VERIFY(pp, (*χ, T, ϕ*), *π*) → {0,1}: take as input the commitment vector (*χ*, *T, ϕ*)*,* the proof *π*, and either accept (output 1) or reject it (output 0).

A PoSW should satisfy the following properties:
- *Correctness:* For any pp = (w, *k)* output by SETUP(1*^{λ}*), statement *χ* ∈ 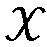 *,* and time parameter $T ∈ ℕ$, if (*ϕ,* 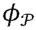 ) ← EVAL(*pp, χ, T)* and *π* ← OPEN(pp, 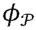 , *γ, T),* then VERIFY(*pp*, (*χ*, *T, ϕ*)*, π*) = 1. So, an honest prover can make a verifier accept by making only *T* sequential queries to 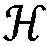 *.*
- *Soundness:* Any cheating prover making only (1 *- α*)*T* sequential queries to 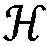 , for some 0 < *α* < 1, will make a verifier accept with probability *(1 - α*)*^{k}.* This probability can be made arbitrarily negligible by increasing the security parameter k ∈ *pp.*
- *Efficiently verifiable:* solutions must be publicly verifiable in total time *O*(polylog(*T*)).

The correctness and soundness properties of PoSW imply that a valid solution to a PoSW constitutes a proof that *T* time passed since *χ* was received.

### Cohen and Pietrzak PoSW

In the Cohen and Pietrzak's PoSW (CP-PoSW), the random oracle is instantiated using a hash function H assumed to be inherently sequential. This means that computing an H-sequence of length *T* requires making *T* queries to *H.* The statement *χ* that is sent by V to P is used to sample a fresh hash function *H_{χ}* defined as *H* salted with *χ*: ${H}_{χ} \left(⋅\right) : = H \left(χ,⋅\right) .$

In the CP-PoSW, 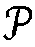 uses *H_{χ}* to compute the labels of a directed acyclic graph (DAG), where the label of a node is the hash of the labels of its parents (u is a parent of *v* if there is a directed edge from u to v). More precisely, the label *lᵢ* ∈ {0,1}*^{w}* of i ∈ V is recursively computed as: ${l}_{i} = {H}_{χ} \left(i,{l}_{{p}_{1}},…,{l}_{{p}_{d}}\right) where \left({p}_{1},…,{p}_{d}\right) = parents \left(i\right) .$

The labels in a DAG can be computed in an arbitrary topological order. Computing the T labels in the DAG boils down to computing a H-sequence of length T and therefore requires *T* sequential queries to *H_{χ}.*

When employing a hash function H that uses the Merkle-Damgård construction, one must pay attention to how the parents of a node are ordered when computing the label of the node. The Merkle-Damgård construction is used to construct a hash function H: {0,1}* → {0,1}*^{w}* for arbitrary input lengths from a compression function *h*: {0,1}^{2*w*} → {0,1}*^{w}* as: $H \left({x}_{1},…,{x}_{z}\right) = {y}_{z} where {y}_{i} : = h \left({x}_{i}, {y}_{i - 1}\right) for i \geq 1 .$

Using this construction, it is possible to compute *yᵢ* using only the known prefix *x*₁, ... , *xᵢ*. An adversary might get an advantage by computing such intermediate *yᵢ*'s before the entire input *x*₁, ... , *x_{z}* is known, and thus exploit the advantage offered by parallelisation to compute the labels of the graph. This can be avoided by requiring *l*_{*p*₁} to be the label of the node that was computed right before the current node.

After having labelled the DAG, 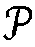 computes the Merkle tree-like commitment of the labels and sends it to V, who then challenges 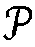 to open some of the labels together with its parents. Finally, the verifier V verifies that the labels received from 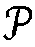 are computed correctly and that the openings are correct with respect to the Merkle tree-like commitment received initially.

### Graph Construction

For $t ∈ ℕ$, *let T* = 2^{*t*+1} - 1 and *Bₜ =* (*V, E')* be a complete binary tree of depth *t.* Each of the *T* nodes can be identified with a binary string of length at most *t,* defined recursively as follows: for a node x ∈ {0,1}^{<*t*}, its left child is identified as *x*∥0 and its right child as *x*∥1. The root is identified with the empty string *ε*. The directed edges in *Bₙ* go from the leaves towards the root: $E ′ = \left\{\left(x\left‖b, x\right.\right):b∈\left\{0, 1\right\},x∈{\left\{0, 1\right\}}^{i},i<t\right\} .$

The DAG ${G}_{t}^{PoSW} = \left(V, E\right)$ that has to be label in CP-PoSW is constructed as follows. Starting with *Bₜ,* add edges E" that contains, for all leaves *u* ∈ {0,1}*^{t}*, an edge (v, *u)* for any *v* that is a left sibling of a node on the path from *u* to the root *ε*. Hence, E *= E' U E",* with: $E " = \left\{\left(v, u\right):u∈{\left\{0, 1\right\}}^{t},v=a\left‖0,u=a\left‖1\right‖a′\right.\right\} .$

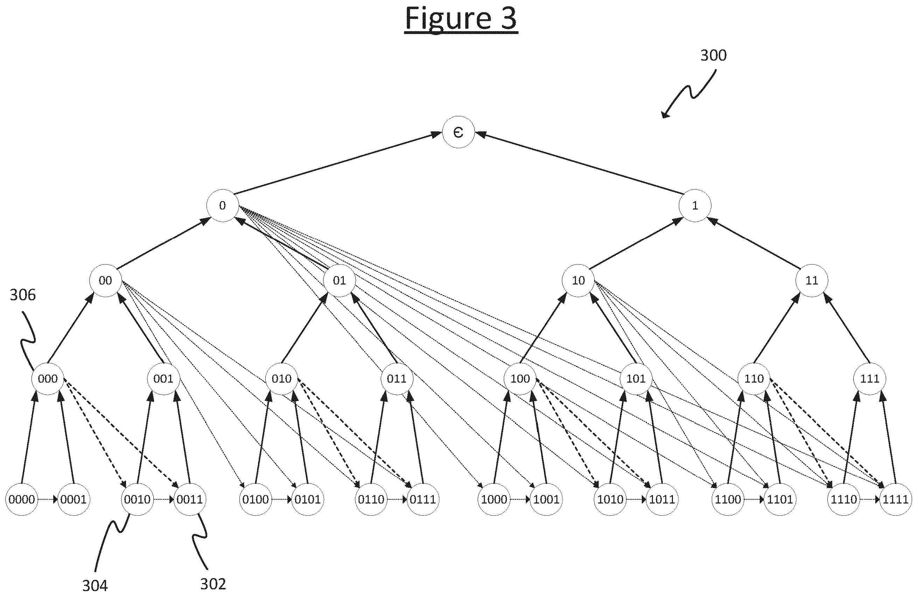

Figure 3 represents a graph ${G}_{4}^{PoSW}$ 300. The edges in E' are represented with solid arrows and the edges in E" are represented with dashed arrows. For example, edge (*v* = 00, *u* = 0100) belongs to E" and is represented with dashed arrow since *u* ∈ {0,1}*^{t}*, *v* = *a*∥0, *u =* all 1∥*a' for a* = 0 and *a'* = 00.

An interesting property of the graph ${G}_{t}^{PoSW}$ 300 used in CP-PoSW is that labels can be computed in a topological order (starting from 0*^{t}*) using only logarithmically many labels in memory at any point.

### Computing the proof

If only logarithmic memory is used, 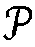 needs to recompute all the labels of the graph to compute the openings of the labels challenged by V. Fortunately, there is a simple trade-off, where using slightly more memory can make the computation of the proof much more efficient. The labels of the nodes at the m upmost levels of the tree {*lᵢ*}_{*i*∈{0,1}^{≤*m*}} can be stored. With this, 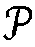 can compute any other node necessary to compute the proof making just 2^{*t-m*+1} - 1 queries to *H_{χ}.*

### Algorithms

CP-PoSW consists of the following quadruple of algorithms. The time parameter $T ∈ ℕ$ is assumed to be of the form *T* = 2^{*t*+1} - 1 for an integer $t ∈ ℕ$. We denote by m ≈ log₂ *M,* where M is the amount of memory we allow 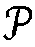 to use (measured in w-bit block).
- SETUP(1*^{λ}*) → pp: take a security parameter *λ* and produce the public parameters $pp = \left(w, k\right) ∈ {ℕ}^{2}$. All parties have access to the hash function *H:* {0,1}* → {0,1}*^{w}*. Typically, w = 256 (for e.g. when *H* is the SHA256 function).
- EVAL(*pp, χ, T)* → (*ϕ,* 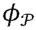 ): compute the labels {*lᵢ*}_{*i*∈{0,1}^{≤*t*}} of the graph ${G}_{t}^{PoSW}$ using *H_{χ}.* Store the labels 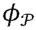 = {*lᵢ*}_{*i*∈{0,1}^{≤*m*}} of the m highest layers and send the root label *ϕ* = *l_{ε}* to *V.*
- OPEN(*pp*, 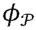 *, γ, T*) → *π*: on challenge *γ* = (*γ*₁, ... , *γₖ*) sampled by V, each element *πᵢ* of the proof vector *π* = (*π*₁, ... , *πₖ*) contains the label *l_{γᵢ}* of node *γᵢ* ∈ {0,1}*^{t}* as well as the labels of all siblings of the nodes on the path from *γᵢ* to the root (as in an opening of a Merkle tree commitment), i.e. ${π}_{i} : = \left({l}_{{γ}_{i}}, {\left\{{l}_{s}\right\}}_{s ∈ {S}_{{γ}_{i}}}\right) ,$ where: ${S}_{{γ}_{i}} : = {\left\{{γ}_{i}\left[0…j-1\right]\left‖\left(1-{γ}_{i}\left[j\right]\right)\right.\right\}}_{j = 0 … t - 1} .$ E.g., for *γᵢ* = 0101 (cf. Figure 3), *πᵢ* contains the labels of 0101, 0100, 011, 00, and 1.
- VERIFY(*pp*, (*χ*, *T, ϕ*)*, π*) → {0,1}: using the fact that in ${G}_{t}^{PoSW}$ all the parents of a leaf *γᵢ* are a subset of *S_{γᵢ},* for every 1 ≤ *i* ≤ *k,* first check that *l_{γᵢ}* was correctly computed from its parent labels ${l}_{{γ}_{i}} {=}^{?} {H}_{χ} \left(i,{l}_{{p}_{1}},…,{l}_{{p}_{d}}\right) where \left({p}_{1},…,{p}_{d}\right) = parents \left({γ}_{i}\right)$ Then, for every 1 ≤ *i* ≤ *k,* verify the "Merkle-tree like" commitment of *l_{γᵢ}* by using the labels in *πᵢ* to recursively compute, for *j = t - 1, t* - 2, ...,0 ${l}_{{γ}_{i} \left[0…j\right]} = {H}_{χ} \left({γ}_{i}\left[0..j\right],{l}_{{γ}_{i} \left[0…j\right] \left‖0\right.},{l}_{{γ}_{i} \left[0…j\right] \left‖1\right.}\right)$ And then verify that the computed root *l*_{*γᵢ*[0...0]} = *l_{ε}* is equal to *ϕ*.

As the prover is public-coin, CP-PoSW can be made non-interactive using the Fiat-Shamir heuristic, by deriving the challenge y as *γ* = (*H_{χ}*(*ϕ, 1), ..., H_{χ}*(*ϕ, k)).* In the non-interactive version of CP-PoSW, the EVAL and OPEN algorithms can be merged together.

Correctness of the CP-PoSW follows from the construction of the protocol. It is easy to see that if an honest prover correctly computes the labels in ${G}_{t}^{PoSW}$ 300 by making T sequential queries to *H_{χ}*, then she will be able to generate a commitment *ϕ* and a proof *π* that will always be accepted by an honest verifier.

For a hash function with a large output (e.g., a 256-bit output), if a cheating prover makes at most (1 *- α*)*T* sequential queries to *H_{χ}* after receiving *χ* (for 0 < *α* < 1), then V will accept the corresponding proof with probability *(1 - α*)*^{k}.* Thus, the protocol is sound when using a large value for *k.* For example, by setting *k =* 100, a cheating prover who makes only 0.8T sequential queries to *H_{χ}* will be able to make V accept with a probability of 2⁻³² (for k = 150, the probability drops to 2⁻⁴⁸).

For a commitment vector (*χ*, *T, ϕ*), verifying the proof *π* can be done by anyone without access to any secret information. It only requires verifying the sampling of the challenge *γ*, verifying that the corresponding labels were correctly computed, and verifying that the Merkle-like commitment of the labels are correct with respect to *ϕ*. In total, VERIFY requires *O*(*k*.log₂ *T)* sequential queries to *H_{χ},* compared *to T* sequential queries required for EVAL. Thus, CP-PoSW offers an exponential gap between the evaluation of the proof and the verification of it.

### 5.3 VERIFIABLE DELAY FUNCTION

A verifiable delay function (VDF) is a function f: 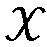 → 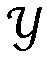 that can only be evaluated after a specified number of sequential steps. A VDF generates a publicly verifiable proof that these steps have been performed to produce the output. In the same way as PoSWs, VDFs guarantee that it takes a party at least a certain amount of time to evaluate them. This prescribed computing time is also required on a parallel computer so that the evaluation cannot be performed faster by parallelising the computation. The only way to gain an advantage is by buying or designing faster hardware but there exists a theoretical lower bound on the time needed to evaluate the VDF.

VDF can be considered as a special case of PoSW that is unique, in the sense that it is not possible to compute two accepting proofs on the same challenge. In PoSWs, if a user removes any single edge in the graph, then the proof will change but it is unlikely to be detected by random challenges.

A VDF consists of the following triple of algorithms:
- SETUP(1*^{λ}*) → pp: randomised algorithm that takes a security parameter *λ* and produces the public parameters pp.
- EVAL(pp, *(x, T))* → (*y, π*): deterministic algorithm that takes as input a challenge $\left(x, T\right) ∈ \left(X, ℕ\right)$ and outputs the response y ∈ 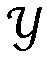 and the proof π that y was correctly computed.
- VERIFY(*pp*, *(x, T), (y, π*)) → {0,1}: deterministic algorithm that takes as input the challenge *(x, T),* the response *(y, π*), and outputs 1 if y is the correct evaluation of the VDF on input x and 0 if not.

A VDF scheme should satisfy the following properties:
- *Correctness:* for any *x* ∈ 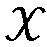 , $T ∈ ℕ$, and pp output by SETUP(1*^{λ}*), if (*y, π*) ← EVAL(pp, *(x, T)),* then VERIFY(*pp*, *(x, T), (y, π*)) *=* 1.
- *Soundness (uniqueness):* for any input *x* ∈ 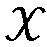 , exactly one *y* ∈ 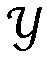 will be accepted by VERIFY. Specifically, let 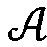 be an efficient algorithm that given pp as input, outputs ((*x, T), (y, π*)) such that VERIFY(pp, *(x, T), (y, π*)) *=* 1, then Pr [EVAL(*pp*, *(x, T))* ≠ *y]* is negligible.
- *Sequentiality:* a parallel algorithm 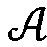 *,* using at most poly(*λ*) processors, that runs in time less than T cannot compute the function. Specifically, for any *x* ∈ 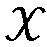 , $T ∈ ℕ$, and pp output by SETUP(1*^{k}*), if (y, *π*) ← EVAL(*pp*, *(x, T))* then Pr [ 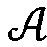 (*pp, (x, T))* = y] is negligible.
- *Efficiently verifiable:* VERIFY should as fast as possible for anyone to compute; it should take total time *O*(polylog(*T*)).

A VDF is based on a computational task that cannot be sped up by parallelisation. Exponentiation in a group of unknown order is believed to have this property. Two VDF constructions have emerged that similarly make use of the serial nature of this task.
1. The first one (Pietrzak) is fast to create but is larger and slower to verify.
2. The second one (Wesolowski) is slower to create (but parallelisable), but is shorter and faster to verify.

The first of these constructions has been used herein. Even though the second VDF is shorter and faster to verify, verifying it requires primality testing. A test that 'proves' primality of a number and not just that primality is 'probable' is called a *deterministic primality test.* When checking whether a number is indeed a prime inside the locking script of a transaction, it is desirable to have deterministic primality tests as the script is public. The issue is that deterministic primality tests are quite expensive when dealing with large numbers. The first VDF doesn't make use of any complex algorithm (such as primality testing) and therefore it is preferred over the second VDF in the context of the uses cases provided herein. Moreover, for VDFs that require less than an hour to evaluate, the gap between two proof sizes is not significant.

### Pietrzak's VDF

The setup algorithm SETUP(1*^{λ}*) of Pietrzak's VDF (P-VDF) outputs two objects:
- A finite abelian group 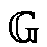 of unknown order (we discuss concrete group setup later).
- An efficiently computable hash function *H*: $X \to G$ modelled as a random oracle.

The evaluation algorithm EVAL(pp, (*x, T))* is defined as follows:
- Compute the hash value *g* ← *H(x).*
- Compute y ← *g*^{2*^{T}*} in 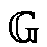 by computing *T* squaring operations in 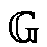 , starting with g.
- Compute the proof *π* as described below.
- Output (*y*, *π*).

Pietrzak gives a public-coin succinct argument for proving that the output y is correct. Given a tuple ( 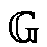 , *H, x, y, T*) as input, the prover and verifier engage in a recursive protocol to prove that *y* = *g*^{2*^{T}*} in 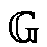 , with *g = H(x).* For simplicity, it is assumed that *T* = 2*^{t}* is a power of 2. The protocol can be adapted to a more general setting where T is not necessarily a power of 2.
1. The verifier checks that *g,* $y ∈ G$ and outputs 0 if not.
2. *If T* = 1 the verifier checks that y = *g*² in 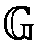 , outputs 1 if it is the case, 0 otherwise, and stops.
3. *If T* > 1 the prover and verifier do:
   a. The prover computes $μ ← {g}^{{2}^{T / 2}} ∈ G$ and sends *µ* to the verifier. The verifier checks that $μ ∈ G$ and outputs 0 and stops, if not.
      Next, the prover needs to convince the verifier that y *= µ*^{2^{*T*/2}} and *µ* = *g*^{2^{*T*/2}} , which proves that y *= g*^{2*^{T}*.} Because the same exponent is used in both equalities, they can be verified simultaneously by checking a random liner combination, namely that: ${μ}^{r} y = {\left({g}^{r}μ\right)}^{{2}^{T / 2}}$ for a random *r* in {1, ..., 2*^{λ}*}.
      The verifier and prover do as follows.
   b. The verifier sends to the prover a random r in {1, ..., 2*^{λ}*}.
   c. Both the prover and verifier compute *g*₂ ← *g^{r} µ* and *y*₂ ← *µ^{r}y* in 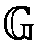 .
   d. The prover and verifier recursively engage in an interactive proof that ${y}_{2} = {g}_{2}^{{2}^{T / 2}}$ in 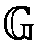 .

### Properties

The P-VDF satisfies the properties of a VDF:
- Correctness: from the recursive structure of the protocol, it can be seen that if *y = g*^{2*^{T}*} in 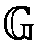 , then the honest verifier will always accept the proof of the honest prover.
- Soundness (uniqueness): the soundness of P-VDF relies on the low order assumption which states that there is no efficient algorithm that takes as input the description of 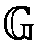 and outputs a pair (v, *d)* where *v^{d}* = 1 for 1 ≠ *v* ∈ 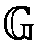 and 1 < *d* < 2*^{λ}*. If the low order assumption holds, then Pietrzak's succinct argument has negligible soundness error.
- Sequentiality: it is believed that computing y requires T sequential squarings in 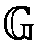 , even on a parallel computer with poly(*λ*) processors. A shortcut does not exist unless | 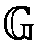 |, the order of 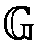 , is known. For anyone who knows | 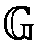 | it is easy to compute y ← *g*^{2*^{T}*}. It only requires two exponentiations: e *=* 2*^{T}* mod | 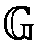 |, followed by *g^{e}.* In this case, the running time is logarithmic in T.
- Efficiently verifiable: at every level of the recursion the verifier does two small exponentiations in 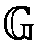 to compute *g*_{*i*+1} and *y*_{*i*+1} for the next level. Hence, verifying the proof takes about 2 log₂ T small exponentiations in 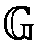 . Overall, the proof *π* contains log₂ T elements in 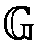 .

### Computing the proof

The proof computes the quantity *µᵢ* at every level of the recursion. We let *g*₁ *= H(x), µ*₁, *r*₁ be the values of *µ* and r at the top level of the recursion, *µ*₂, *r*₂ the values at the next level, and so on. Unwinding the recursion shows that these quantities are: ${μ}_{1} = {g}_{1}^{\left({2}^{T / 2}\right)}$ ${μ}_{2} = {g}_{2}^{\left({2}^{T / 4}\right)} = {\left({g}_{1}^{{r}_{1}}{μ}_{1}\right)}^{\left({2}^{T / 4}\right)} = {\left({g}_{1}^{\left({2}^{T / 4}\right)}\right)}^{{r}_{1}} {g}_{1}^{\left({2}^{3 T / 4}\right)}$ $\begin{matrix}{μ}_{3} = {g}_{3}^{\left({2}^{T / 8}\right)} = {\left({g}_{2}^{{r}_{2}}{μ}_{2}\right)}^{\left({2}^{T / 8}\right)} = {\left({g}_{1}^{{r}_{1} {r}_{2}}{μ}_{1}^{{r}_{2}}{μ}_{2}\right)}^{\left({2}^{T / 8}\right)} \\ = {\left({g}_{1}^{\left({2}^{T / 8}\right)}\right)}^{{r}_{1} {r}_{2}} {\left({g}_{1}^{\left({2}^{3 T / 8}\right)}\right)}^{{r}_{1}} {\left({g}_{1}^{\left({2}^{5 T / 8}\right)}\right)}^{{r}_{2}} {g}_{1}^{\left({2}^{7 T / 8}\right)}\end{matrix}$ ${μ}_{4} = {g}_{4}^{\left({2}^{T / 16}\right)} = a power product of eight elements$ ${{g}_{1}}^{\left({2}^{T / 16}\right)} , {g}_{1}^{\left({2}^{3 T / 16}\right)} , {g}_{1}^{\left({2}^{5 T / 16}\right)} , … , {g}_{1}^{\left({2}^{15 T / 16}\right)} .$

The pattern that emerges suggests an efficient way to construct the proof *π*. When the VDF evaluator computes the VDF output $y = {g}_{1}^{{2}^{T}}$, it stores 2*^{d}* group elements ${g}_{1}^{\left({2}^{\left(i.T/{2}^{d}\right)}\right)}$ for i = 0, ... , 2*^{d}* - 1 as they are encountered along the way (we explain later how the value d is determined).

When constructing the proof *π*, these 2*^{d}* stored values let it compute the group elements *µ*₁, ... , *µ_{d}* needed for the proof using a total of about 2*^{d}* small exponentiations in G. The prover computes the remaining elements *µ*_{*d*+1}, *µ*_{*d*+2}, ... , *µ*_{log *T*} from scratch by raising *g*_{*d+*1}, *g*_{*d*+2}, ... , *g*_{log *T*} to the appropriate exponents. This step takes a total of *T*/2*^{d}* multiplications in 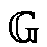 . Hence, the total number of multiplications to compute the proof is about 2*^{d}* + *T*/2*^{d},* which suggests that $d = \frac{1}{2} {log}_{2} T$ is optimal. Hence, the VDF output and the proof *π* can be computed in total time approximately $\left(1+\frac{2}{\sqrt{T}}\right) T$*.*

### Concrete groups setup

The RSA group ${ℤ}_{N}^{∗}$ where *N = pq* for a pair of distinct primes p and *q* is a natural choice for G. However, the low order assumption needed to prove soundness is trivially false in such groups because $- 1 ∈ {ℤ}_{N}^{∗}$ is an element of order two. The group ${ℤ}_{N}^{∗} \ \left\{\pm 1\right\}$ where the low order assumption is believed to hold is worked in, thus ensuring the protocol sound. The generation of the modulus *N* must be trusted to not reveal the factorisation of *N.* Either involving a trusted party that immediately forgets the values *p, q* after generating them or using multi-party computation to sample N can be implemented. When the factorisation of *N* is unknown, computing the order *φ*(*N*) of ${ℤ}_{N}^{∗}$ is as hard as factorising *N,* and therefore ${ℤ}_{N}^{∗} \ \left\{\pm 1\right\}$ can be used as a group of unknown order.

Integers *N* can be used that are a product of strong primes. A prime number p is *strong* if (p - 1)/2 is also a prime number. If *N = pq* is a product of distinct strong primes, then the group ${ℚℝ}_{N} : = \left\{{z}^{2}:z∈{ℤ}_{N}^{∗}\right\}$ contains no elements of low order other than 1. Hence, the low order assumption holds unconditionally in this group. Using ${ℚℝ}_{N}$ instead of ${ℤ}_{N}^{∗}$ does not make computing *x*^{2*T*} significantly easier. In Step (3.a) of the protocol, the verifier needs to check if $v ∈ {ℚℝ}_{N}$. When performing the computation in ${ℚℝ}_{N}$, the protocol should therefore be adapted so that the prover sends *µ'* s.t. *µ'*² = *µ* mod N. The verifier would then compute *µ* := *µ'*² mod N and thus be certain that $μ ∈ {ℚℝ}_{N}$. As here the prover can send any of the 4 roots of *µ*, the proof is not unique.

The computation can be performed in the group of signed quadratic residues ${ℚℝ}_{N}^{+}$*,* which is isomorphic to ${ℚℝ}_{N}$. The group ${ℚℝ}_{N}^{+}$ is defined as ${ℚℝ}_{N}^{+} : = \left\{\left|x\right|:x∈{ℚℝ}_{N}\right\}$, where |*x*| is the absolute value when representing elements of ${ℤ}_{N}^{∗}$ as the set *{-(N -* 1)/2, ..., *(N* - 1)/2}. The group $\left({ℚℝ}_{N}^{+},∘\right)$ is a cyclic group, where the group operation is given by a ∘ *b* := |*a* · b mod *N*|. The advantage of using ${ℚℝ}_{N}^{+}$ over ${ℚℝ}_{N}$ is that membership in ${ℚℝ}_{N}^{+}$ can be efficiently tested: a given $x ∈ {ℤ}_{N}^{∗}$ (represented as *{-(N -* 1)/2, *..., (N* - 1)/2} belongs to ${ℚℝ}_{N}^{+}$ if x ≥ 0 and its Jacobi symbol is +1. Using ${ℚℝ}_{N}^{+}$ instead of ${ℚℝ}_{N}$ also makes the proof unique.

In order to entirely avoid a trusted setup by making sure the order of 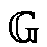 is unknown to everyone, the class group of the imaginary quadratic field $ℚ \left(\sqrt{p}\right)$ can be used, where p is a negative prime such that p ≡ 1 mod 4. This class group has odd order and computing its order is believed to be difficult when |*p*| is large, even for parties knowing p.

### Non-interactive protocol

Thanks to the public-coin nature of Pietrzak's succinct argument, the proof can be made non-interactive using the Fiat-Shamir heuristic. The prover generates the challenge *rᵢ* at every level of the recursion by hashing the quantities (*gᵢ*, *yᵢ*, *µᵢ*, *T*/2^{*i*-1}) using a hash function $h : \left\{0, 1\right\} * \to {ℤ}_{{2}^{λ}}$ and appends *µᵢ* to the overall proof *π*. In the following, we assume that all operations are performed in $G = {ℤ}_{N}^{∗} \ \left\{\pm 1\right\}$.
- SETUP(1*^{λ}*) → pp: the statistical security parameter *λ* defines *λ_{RSA}*, the bitlength of the generated modulus N. The parameter *λ_{RSA}* should be at least as large so that the *λ_{RSA}* bit modulus offers *λ* bits of security (e.g. *λ* = 256 and *λ_{RSA}* = 2048). Then, select a hash function $H : \left\{0, 1\right\} * \to {ℤ}_{N}^{∗} \ \left\{\pm 1\right\}$ and output the pair pp = *(N, H).*
- EVAL(pp, *(x, T))* → (*y, π*): output (*y, π*) where *y = H*(*x*)^{2*^{T}*} mod N and *π* = {*µᵢ*}_{*i*∈[*t*]} the corresponding proof that y has been computed correctly. Let (*g*₁, *y*₁) := (*H*(*x*), *y*) and for i = *1, ..., t* let: ${μ}_{i} : = {g}_{i}^{{2}^{T / {2}^{i}}}$ ${r}_{i} : = hash \left({g}_{i},{y}_{i},{μ}_{i},T/{2}^{i - 1}\right)$ ${g}_{i + 1} : = {g}_{i}^{{r}_{i}} ⋅ {μ}_{i}$ ${y}_{i + 1} : = {μ}_{i}^{{r}_{i}} ⋅ {y}_{i}$
- VERIFY(*pp*, *(x, T),* (*y, π*)) → {0,1}: parse *π* = {*µᵢ*}_{*i*∈[*t*]} and check if *g*₁*_{,} y*₁ := (*H*(*x*), *y)* and all *µᵢ* ∈ 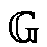 , if this is not the case output 0. Otherwise, for i *=* 1, *..., t* compute: ${r}_{i} : = hash \left({g}_{i},{y}_{i},{μ}_{i},T/{2}^{i - 1}\right)$ ${g}_{i + 1} : = {g}_{i}^{{r}_{i}} ⋅ {μ}_{i}$ ${y}_{i + 1} : = {μ}_{i}^{{r}_{i}} ⋅ {y}_{i}$ Finally, check whether ${y}_{t + 1} {=}^{?} {g}_{t + 1}^{2}$ and output 1 if this holds, 0 otherwise.

### 6. SECURE PUZZLE BOUNTY

A series of schemes to secure a puzzle bounty that can be claimed by anyone and whose solution is not required to be known by the challenger who creates the bounty transaction, also referred to herein as a challenge transaction, are provided herein. The puzzle solution is denoted by *S_{puz}* in the rest of this section. The challenger creates a challenge transaction that can be redeemed by anyone (a challengee) who broadcasts a redemption transaction, also referred to herein as a solution transaction, containing *S_{puz}.* The schemes ensure that the first user to broadcast *S_{puz}* effectively receives the puzzle bounty by preventing other users from intercepting the solution *S_{puz}* included in the redemption transaction and redeeming the bounty themselves.

The solution of a puzzle locking a Bitcoin transaction must be publicly verifiable so that any miner can verify its correctness. Any suitable puzzle may be used in the schemes provided herein. Some example suitable puzzles, whose solutions are publicly verifiable include:
- Hash puzzle: the puzzle can be solved by providing the pre-image of some hash value (section 4).
- Prime number puzzle: the puzzle expects a prime number larger than a predefined value as a solution. This puzzle incentivises users to spend their computational power to find large prime numbers.
- Evaluation of some Verifiable Delay Function: the puzzle rewards any user who computes the evaluation of some verifiable delay function, typically the result of multiple squaring operations in an RSA group.
- Proof of retrievability: the puzzle requires a proof that a user allocated space to store a particular file and that this file is intact.
- Protein folding: the puzzle requires users to fold some protein and prove they correctly did so.

The puzzle used may allow for the bounty to be claimed by anyone. Also, the puzzle solution need not necessarily known by the challenger.

The schemes to secure puzzle bounties all follow the same principle. They require users to provide in the redemption transaction, in addition to the puzzle solution *S_{puz},* some proof of computation *Π_{Pk,S_{puz}}* tied to *S_{puz}* and the public key *Pk* that signs the redemption transaction. An attacker that tries to swap the public key in the redemption transaction would thus have to recompute the proof of computation from scratch. Since the proof of computation is included in the redemption transaction and verified by all the miners of the network as part of the transaction verification process, this proof should be a publicly verifiable one.

The proof of computation ensures that a certain amount of time has passed since the solver found the puzzle solution. This time delay should be large enough to ensure that the redemption transaction of the legitimate solver gets accepted by the network before a malicious user intercepting the solution *S_{puz}* is able to create a valid redemption transaction with a valid proof *Π_{Pk',S_{puz}}* tied to its public key *Pk'.*

One challenge in designing these schemes is to ensure that the amount of time needed to produce *Π_{Pk,S_{puz}}* is independent of the amount of hardware of users so that an estimate on the time required to produce *Π_{Pk,S_{puz}}* can be approximated for all users (or at least a lower bound). The goal is that even an adversary that uses massive parallel hardware is not able to generate a valid proof of computation tied to its public key before the first legitimate redemption transaction gets accepted by the network. Another challenge is to minimise the size overhead induced by the inclusion of the proof of computation in the redemption transaction and the verification of it in the bounty transaction.

The schemes used to secure puzzle bounties separately make use of five different types of proof of computation:
- Section 6.1 - Proof of Work (PoW): this scheme is inspired by Bitcoin PoW. The size overhead is negligible, but this scheme is not secure against a parallel adversary.
- Section 6.2 - Chained Proof of Work: this scheme is based on chaining PoW to limit the advantage offered by parallel computation. The size overhead is quite significant for both the users and the challenger (bounty and redemption transaction).

The following three schemes are based on sequential proofs of computation that remove the advantage offered by parallel computation.
- Section 6.3 - Sloth: this scheme uses the Sloth construction set out in section 5.1. The size overhead is negligible in the redemption transaction but quite significant in the bounty transaction.
- Section 6.4 - Proof of Sequential Work: this scheme uses Cohen and Pietrzak's PoSW set out in section 5.2. The overhead is balanced between the bounty and redemption transaction.
- Section 6.5 - Verifiable Delay Function: this scheme uses Pietrzak's VDF as set out in section 5.3. The main overhead is in the bounty transaction.

In Section 6.6, a detailed comparison of the schemes in terms of script size is presented, depending on the security level desired, and resistance to parallel computing.

In each of the schemes set out below, the challenger generates a locking script for including in the challenge transaction which verifies:
i. that the puzzle solution *S_{puz}* provided be the challengee satisfies the puzzle;
ii. that the proof *Π_{Pk,S_{puz}}* provided by the challengee satisfies a proof criterion as defined to the scheme; and
iii. that a signature generated for the solution transaction is valid for the public key provided in the solution transaction.

The proof criterion implemented depends on the chosen scheme. The proof criterion in each case is satisfied only if the proof *Π_{Pk,S_{puz}}* provided by the challengee is derived from the public key and the puzzle solution *S_{puz}* provided by the challengee.

In each scheme, the challengee generates the puzzle solution *S_{puz}* and the proof *Π_{Pk,S_{puz}},* and provides these together with their public key in an unlocking script of the solution transaction. The unlocking script also comprises a signature generated for the solution transaction valid for the public key. The puzzle solution and proof provided in the solution blockchain transaction may be referred to herein as a challenge puzzle solution and a challenge proof respectively.

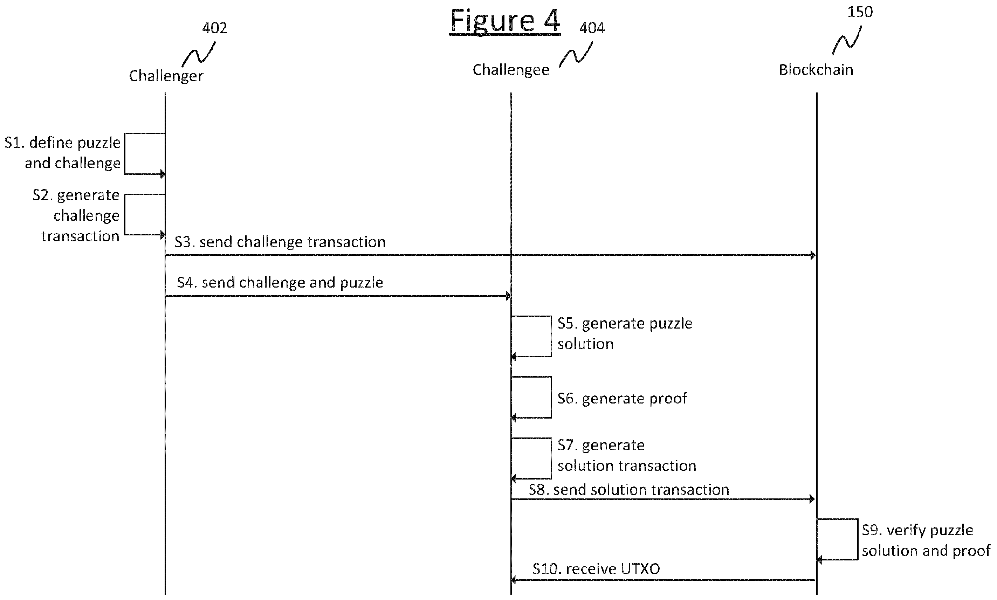

Figure 4 summarises the methods of each scheme.

As step 1, a challenger 402 defines a puzzle and a challenge. The puzzle may be one of those set out above, and the solution of the puzzle is publicly verifiable. The challenge as defined by the challenger 402 may identify the type of scheme to be used and any variables of the challenge criterion. For example, if the challenge criterion defines a threshold value (see the examples of sections 6.1 and 6.2), this may be defined by the challenger 402 when defining the challenge. Other challenge variables may include a chain length *L,* time parameter *T,* and number of leaves k. It will be apparent to the person skilled in the art when reading the schemes as set out below that other variables may be provided as challenge variables in the challenge. The scheme to be used is identified by its name or other suitable identifier, or by the calculations for generating the proof, for example.

At step 2, the challenger 402 generates the challenge transaction. The challenge transaction comprises a first locking script which is configured to verify each of the puzzle solution *S_{puz},* the proof *Π_{Pk,S_{puz}}*, and the signature of the solution transaction. The first locking script is associated with a bounty, or other UTXO, which is unlocked by a valid unlocking script. At step 3, the challenge transaction is sent to the blockchain 150, where it is stored.

The challenge and puzzle are made available to the challengee 404 at step 4. These may be sent directly to the challengee 404 from the challenger 402. Alternatively, the puzzle and challenge may be made publicly available for example on a website. In some embodiments, the challenge and puzzle are provided in the challenge transaction, such that the puzzle and challenge are rendered visible when the challenge transaction is sorted to the blockchain 150, or when the challenge transition is retrieved from the blockchain 150.

At step 5, the challengee 404 generates a candidate puzzle solution *S_{puz}* corresponding to the defined puzzle. The challengee 404 uses the candidate puzzle solution and their public key to compute a candidate proof *Π_{Pk,S_{puz}}* at step 6. Methods for generating the candidate proof are set out below.

The challengee 404 generates a solution transaction comprising a first unlocking script for unlocking the UTXO of the challenge transaction. The first unlocking script comprises the candidate puzzle solution *S_{puz},* the candidate proof *Π_{Pk,S_{puz}}*, and the challengee's public key *Pk.* The public key *Pk* is used to sign the solution transaction, which is then sent to the blockchain 150 for storing, step 8.

The first locking script of the challenge transaction is then executed together with the first unlocking script of the solution transaction to verify the candidate puzzle solution, candidate proof, and signature, step 9. The methods for verifying the candidate proof depends on the scheme used as set out below.

If each of the candidate proof, candidate puzzle solution, and signature are verified, the UTXO is made available to the challengee 404.

The method of Figure 4 is implemented in each of the schemes set out below, with a different challenge being defined for each scheme. The way in which the candidate proof is generated (step 6) and the proof verified (step 9) is dependent on the scheme being used.

### 6.1 PROOF OF WORK

This scheme to secure a puzzle bounty is inspired by Bitcoin Proof of Work (PoW). Bitcoin uses PoW to secure a bounty. The first miner to solve the PoW puzzle can redeem the bounty by claiming the coinbase transaction. The bounty is secure because, if one modifies the coinbase transaction (or any other transaction in the block), the solution to the PoW puzzle changes and thus the work has to be redone from scratch.

Similarly, a puzzle bounty can be secured by requiring the solver of a puzzle (the challengee) to provide the solution to a PoW puzzle inside the redemption transaction. More specifically, given the solution to the puzzle *S_{puz},* the public key *Pk* that signs the redemption transaction, a 32-byte target difficulty *target,* and a hash function *H,* the proof ${Π}_{Pk , {S}_{puz}}^{PoW}$ employed in this scheme can be formulated as follows: ${Π}_{Pk , {S}_{puz}}^{PoW} : Find a nonce ∈ \left\{0, 1\right\} * such that int \left(H\left(nonce\left‖Pk\right‖{S}_{puz}\right)\right) mod {2}^{256} \leq target .$

The smaller the target value, the longer (probabilistically) it will take users to find a nonce value that satisfies this equation.

In this scheme, the proof provided by the challengee is *nonce.*

The proof criterion may be said to define a threshold value *(target).* The proof criterion is satisfied if a candidate target value, calculated based on the proof *(nonce),* the public key *(Pk),* and the puzzle solution (*S_{puz}*) provided by the challengee in the solution transaction, is less than or equal to the threshold value. The candidate target value in this example is int (*H*(*nonce*∥*Pk*∥*S_{puz}*)) mod 2²⁵⁶, although it will be appreciated that other functions for defining the candidate target value may be defined.

To determine the challenge proof, the challengee has access to the proof criterion, and in particular the function for defining the candidate target value and the threshold value. The challengee may perform trial and error calculations to find the proof *(nonce)* that satisfies the criterion.

In the following implementation, the hash function H is SHA256 applied twice.
[VerifyPuzzleSolution] denotes the script portion that verifies the puzzle solution *S_{puz}* required to redeem the bounty. The locking script of a bounty transaction secured with a PoW puzzle is as follows:
Locking script:
OP_2 OP_PICK OP_2 OP_PICK OP_CAT OP_CAT OP_HASH256 <0x00> OP_CAT *<target>* OP_LESSTHANOREQUAL OP_VERIFY [VerifyPuzzleSolution] OP_CHECKSIG

The unlocking script of the redemption transaction would be as follows:
Unlocking script: $\left〈{sig}_{Pk}\right〉 \left〈Pk\right〉 \left〈{S}_{puz}\right〉 \left〈nonce\right〉$

The unlocking script is valid if:
- The nonce value produces a hash with a value lower or equal to the specified target: *int SHA256* (*SHA256*(*nonce*∥*Pk*∥*S_{puz}*))) ≤ *target.*
- The puzzle solution *S_{puz}* is correct (passes the VerifyPuzzleSolution check).
- The signature is a valid signature for the transaction and the public key *Pk.*

The verification of the nonce value ensures that some amount of time has passed since the solver found the solution. Since the nonce is concatenated with *Pk* before hashing it, another user cannot swap *Pk* without spending time recomputing a valid nonce.

The size overhead in the bounty transaction and redemption transaction is only of a few bytes.

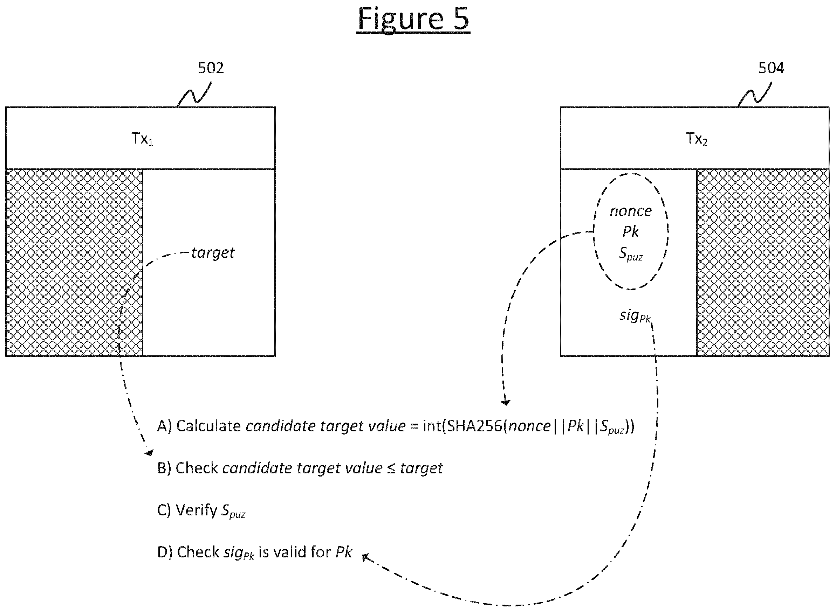

Figure 5 schematically shows the verification steps implemented to validate the unlocking script.

The challenger 402 generates the challenge transaction 502 with a locking script comprising the threshold value *target.* The challengee 404 generates the solution transaction 504, with an unlocking script comprising the candidate puzzle solution *S_{puz},* the candidate proof *nonce,* and the challengee's public key *Pk.* The solution transaction 504 also comprises a signature *sig_{Pk}* derived from the challengee's public key *Pk.*

The locking script of the challenge transaction 502 and the unlocking script of the solution transaction 504 are then run together, and the steps A-D are performed in script.

First, as step A, the candidate target value is computed using the candidate proof, the public key, and the puzzle solution of the unlocking script. The computed candidate target value is then compared to the threshold value of the locking script to determine if it meets the challenge criterion, i.e. that the candidate target value is less than or equal to the threshold value, step B.

At step C, the candidate puzzle solution is verified for the puzzle defined by the challenger 402. The way in which the candidate puzzle is verified is dependent on the type of puzzle used. The skilled person will understand ways in which the candidate puzzle solution may be verified.

It is then determined if the signature of the solution transaction 504 is valid for the public key of the unlocking script, step D.

If each check is found to be valid, the locking script of the solution transaction 504 is determined to be valid and the UTXO of the challenge transaction 502 unlocked.

### 6.2 CHAINED PROOF OF WORK

One problem with the previous scheme is that a well-motivated adversary can easily speed up the generation of the PoW solution by deploying enough parallel hardware. That is, in the proof of work scheme set out in section 6.1, the time required to compute a valid nonce might be different from one user to another. Indeed, the resolution of a PoW puzzle can be sped up (probabilistically) by parallelising the computation. For a fixed target value, an adversary's ability to steal a puzzle bounty depends on its amount of hardware. Thus, the PoW scheme set out above is not secure against adversaries who are able to deploy massive amount of parallel hardware.

In order to mitigate the advantage offered by parallelisation, the following scheme can be used to secure a puzzle bounty.

Instead of a single PoW puzzle, the following scheme requires users to solve multiple PoW puzzles chained together. Because the characteristic of chaining requires the previous value for constructing the next one, the process of solving a chain of PoW puzzles is, to some extent, sequential. In particular, synchronisation between processors is needed each time a solution to a PoW puzzle in the chain is found. This property can be used to limit the advantage of using massive parallel computing in stealing a puzzle bounty.

The chained PoW puzzles are defined as follows:
- The first puzzle in the chain is defined in a similar way as in the previous scheme. Given the solution to the puzzle *S_{puz},* the public key *Pk* that signs the redemption transaction, a 32-byte target difficulty *target,* and a hash function *H,* the goal is to find a value *nonce*₀ such that: $int \left(H\left({nonce}_{0}\left‖Pk\right‖{S}_{puz}\right)\right) mod {2}^{256} \leq target .$
- Subsequent puzzles in the chain are based on the previous puzzle, similarly to how the block header chain is secured in Bitcoin. Specifically, the *i*-th puzzle in the chain requires finding a value *nonceᵢ* such that: $int \left(H\left({nonce}_{i}\left‖{h}_{i - 1}\right.\right)\right) mod {2}^{256} \leq target ,$ where *h*_{*i*-1} is the hash value resulting from solving the previous puzzle, *H* and *target* being the same as in the first puzzle, i.e.: $\left\{\begin{matrix}{h}_{0} = H \left({nonce}_{0}\left‖Pk\right‖{S}_{puz}\right) \\ {h}_{i} = H \left({nonce}_{i}\left‖{h}_{i - 1}\right.\right) , for 0 < i \leq L - 1\end{matrix}\right. .$

In this scheme, the proof of computation ${Π}_{Pk , {S}_{puz}}^{Chained PoW}$ for a chain of length *L* can be formulated as follows: $\begin{matrix}{Π}_{Pk , {S}_{puz}}^{Chained PoW} : Find L values {nonce}_{0} , … , {nonce}_{L - 1} ∈ \left\{0, 1\right\} * such that \\ \left\{\begin{matrix}int \left(H\left({nonce}_{0}\left‖Pk\right‖{S}_{puz}\right)\right) mod {2}^{256} \leq target \\ int \left(H\left({nonce}_{i}\left‖{h}_{i - 1}\right.\right)\right) mod {2}^{256} \leq target , for 0 < i \leq L - 1\end{matrix},\right. \\ with \left\{\begin{matrix}{h}_{0} = H \left({nonce}_{0}\left‖Pk\right‖{S}_{puz}\right) \\ {h}_{i} = H \left({nonce}_{i}\left‖{h}_{i - 1}\right.\right) , for 0 < i \leq L - 1\end{matrix}.\right.\end{matrix}$

That is, the challenge proof comprises a sequence of candidate proof values (*nonceᵢ*), and are used to calculated a sequence of candidate target values. The first of the candidate target value (*h*₀) is calculated using *nonce*₀, *S_{puz},* and *Pk.* Each subsequent candidate target value (*hᵢ*) of the chain is calculated from a corresponding one of the proof values (*nonceᵢ*), and the previous candidate target value in the chain. Since the final candidate target value is computed based on a final proof value *nonce*_{*L*-1} and a penultimate candidate target value *h*_{*L*-2}, the final candidate target value is in fact based on all of the proof values, that is the whole proof ${Π}_{Pk , {S}_{puz}}^{Chained PoW}$, the public key, and the puzzle solution.

The time required to evaluate ${Π}_{Pk , {S}_{puz}}^{Chained PoW}$ depends on both the *target* value and the length value *L.* The effect of increasing *L* linearly increases the time required by any user to evaluate ${Π}_{Pk , {S}_{puz}}^{Chained PoW}$, irrespective of their amount of parallel hardware. However, the effect of increasing the *target* value on the evaluation time of the proof can be nullified by employing a large amount of parallel hardware.

In the following implementation, the hash function *H* is SHA256 applied twice. The locking script of a bounty transaction secured with a chained PoW puzzle of length *L* ≥ 2 can be constructed by adding the following opcodes:
1. Copy the second-to-last and third-to-last values at the top of the stack (to pull *Pk* and *sol*):
   *<L* + 1> OP_PICK *<L* + 1> OP_PICK
2. Verify that the first nonce value *nonce*₀ satisfies:$int \left(SHA256\left(SHA256\left({nonce}_{0}∥Pk∥{S}_{puz}\right)\right)\right) \leq target .$ OP_CAT OP_CAT OP_HASH256 *<target>* OP_SWAP OP_2DUP <0x00> OP_CAT OP_GREATERTHANOREQUAL OP_VERIFY
3. For i = 1 to *L* - 2, add the following opcodes to verify that *nonceᵢ* satisfies *int*(*SHA*256(*SHA*256(*nonceᵢ*∥*h*_{*i-*1}))) ≤ *target:*
   OP_ROT OP_SWAP OP_CAT OP_HASH256 OP_2DUP <0x00> OP_CAT
   OP_GREATERTHANOREQUAL OP_VERIFY
4. Verify that the last nonce *nonce*_{*L*-1} satisfies$int \left(SHA256\left(SHA256\left({nonce}_{L - 1}∥{h}_{L - 2}\right)\right)\right) \leq target .$
   OP_ROT OP_SWAP OP_CAT OP_HASH256 <0x00> OP_CAT
   OP_GREATERTHANOREQUAL OP_VERIFY
5. Verify that the puzzle solution *S_{puz}* is correct:
   [VerifyPuzzleSolution]
6. Verify that the signature is a valid signature for the transaction and the public key *Pk:*
   OP_CHECKSIG

The unlocking script of the redemption transaction would be as follows:
Unlocking script:
*<Sig_{Pk}> <Pk> <S_{puz}> <nonce*_{*L*-1}> *<nonee_{L-2}>* ... *<nonce*₀>

Where *<nonce*_{*L*-1}> *<nonce*_{*L*-2}*>* ... *<nonce*₀> is the sequence of proof values.

The unlocking script is valid if:
- The nonce value *nonce*₀ produces a hash with a value lower or equal to the specified target: int(*SHA*256 (*SHA*256(*nonce*₀∥*Pk*∥*S_{puz}*))) ≤ *target.*
- Each subsequent nonce value *nonceᵢ* are such that:$int \left(SHA256\left(SHA256\left({nonce}_{i}∥{h}_{i - 1}\right)\right)\right) \leq target , for 0 < i \leq L - 1$
- The puzzle solution *S_{puz}* is correct (passes the VerifyPuzzleSolution check).
- The signature is a valid signature for the transaction and the public key *Pk.*

In this scheme, each puzzle is dependent from the previous one. Since the first puzzle is initialised with the public key *Pk* that signs the redemption transaction, there is a dependence between *Pk* and all subsequent puzzles. This implies that an adversary cannot reuse any of the nonce in the chain and has to recompute them all for its redemption transaction signed with *Pk'* ≠ *Pk* to be valid.

Each candidate target value *hᵢ* is check against the threshold value *target.* It is important to verify each of the candidate target values. This is because, if only the final candidate target value *h*_{*L*-1} were verified, i.e. check that int(*SHA*256(*SHA*256(*nonce*_{*L*-1}∥*h_{L-2}*))) ≤ *target,* then the challengee only needs to find a suitable *h*_{*L*-2}*.* The amount of work that is needed to find a suitable *h*_{*L*-2} is the same as in the PoSW scheme described herein, however the work can be parallelised more easily, and thus computed more quickly.

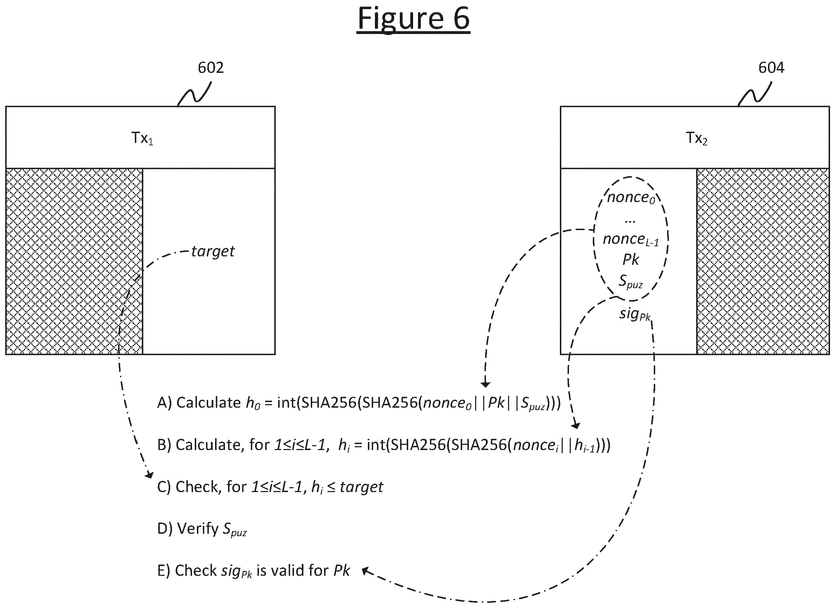

Figure 6 shows schematically the method for verifying the unlocking script of the solution transaction 604. The method is similar to that of Figure 5, set out above.

The challenger 402 generates the challenge transaction 602 with a locking script comprising the threshold value *target.* The challengee 404 generates the solution transaction 604, with an unlocking script comprising the candidate puzzle solution *S_{puz},* the candidate proof *nonce*₀, *..., nonce*_{*L*-1}, and the challengee's public key *Pk.* The solution transaction 604 also comprises a signature *sig_{Pk}* derived from the challengee's public key *Pk.*

Then the locking script of the challenge transaction 602 and the unlocking script of the solution translation 604 are run together, such that the steps A-E are performed in script.

First, at step A, the first candidate target value *h*₀ is computed using the first candidate proof value *nonce*₀, the public key, and the puzzle solution of the unlocking script. Subsequent candidate target values *hᵢ* are then calculated at step B, with each of these candidate target values being based on a corresponding candidate proof value *nonceᵢ* and a directly previous one of the candidate target values *h*_{*i*-1}.

Each of computed candidate target value *hᵢ* is then compared to the threshold value of the locking script to determine if they meet the challenge criterion, i.e. that each of the candidate target values is less than or equal to the threshold value, step C.

At step D, the candidate puzzle solution is verified for the puzzle defined by the challenger 402. The way in which the candidate puzzle is verified is dependent on the type of puzzle used. The skilled person will understand ways in which the candidate puzzle solution may be verified.

It is then determined if the signature of the solution transaction 604 is valid for the public key of the unlocking script, step E.

If each check is found to be valid, the locking script of the solution transaction 604 is determined to be valid and the UTXO of the challenge transaction 602 unlocked.

In the scheme described in this section, the challengee can use parallel computation to solve the puzzle, but for each intermediate *hᵢ*, the parallel processors have to synchronise to start solving the next problem for *h*_{*i*+1} which limits the speed-up offered by parallelising the computation.

Because puzzles are linked in a chain, synchronisation between processors is needed which creates some resistance to parallel computing. However, an adversary can still use parallel computing to speed up the resolution of each individual puzzle. Large chains are therefore needed to mitigate the effect of parallel computation. Each hash puzzle in the chain requires 7 additional bytes in the bounty transaction and one nonce value is the redemption transaction. When considering chains of hundreds of thousands of hash puzzles, the overhead induced by the chained PoW scheme can be become quite significant.

In practice, this scheme has limitations because the script size rapidly becomes very large if a good resistance to parallel computation is desired. That is, there is a trade-off between script size and resistance to parallel computation here.

The following schemes are provided as alternatives which are inherently fully resistant to parallel computation and have reasonable script size.

### 6.3 SLOTH

As set out above, the previous chained PoW scheme can be used to mitigate the advantage of using massive parallel hardware to steal a puzzle bounty. However, its effect is only appreciable when large chains of puzzle are used. The problem with having large chains of puzzle is that it introduces a significant size overhead in the bounty and redemption transaction, and thus is inefficient in terms of storage.

In this scheme, the Sloth chain set out in section 5.1 is leveraged to create a scheme that is fully resistant to parallel adversaries. The proof of computation ${Π}_{Pk , {S}_{puz}}^{Sloth}$ employed in this scheme requires evaluating a Sloth chain, which can only be done sequentially.

The advantage of using proofs of sequential computation is that the time required to evaluate them can be much better approximated as it does not depend on the amount of hardware available. Users (challengees) can still invest in faster hardware to speed up the evaluation of the proof, but the physical limits of hardware impose a limit on the computational time gap between users, which can be made unbounded in parallelisable proofs of computation. In particular, there exists a theoretical lower bound on the time required to evaluate any proof of sequential computation.

Sloth proposes chaining a series of square root computations in ${ℤ}_{p}$ interleaved with a simple permutation such that the chain can only be evaluated sequentially. More specifically, Sloth defines two permutations on ${ℤ}_{p}$: a permutation *ρ* such that *ρ*(*x*)² *=* ±*x,* and a permutation σ such that *σ*(*x*) *= x* ± 1 depending on the parity of *x.* The parity of *x* is defined as the integer parity of the unique *x̂* such that *x̂ = x* mod*p*.

The output of a Sloth chain of length *L* for an input *x* is *w = τ^{L}*(*x*) *=* (*ρ* ∘ σ)*^{L}*(*x*). For more details, see section 5.2. Verifying w implies iterating the permutation *τ*⁻¹ = *σ*⁻¹ o *ρ*⁻¹ a total of L times, where: ${σ}^{- 1} \left(y\right) = σ \left(y\right) = \left\{\begin{matrix}y + 1 , & if y is odd \\ y - 1 , & if y is even\end{matrix}\right.$ and ${ρ}^{- 1} \left(y\right) = \left\{\begin{matrix}+ {y}^{2} , & if y is even \\ - {y}^{2} , & if y is odd\end{matrix}\right. .$

Given the solution to the puzzle *S_{puz},* the public key *Pk* that signs the redemption transaction, a 2048-bit prime *p,* a hash function *H,* the chain length $L ∈ ℕ$, the proof ${Π}_{Pk , {S}_{puz}}^{Sloth}$ employed in this scheme can be formulated as follows: ${Π}_{Pk , {S}_{puz}}^{Sloth} : Compute w = {\left(ρ∘σ\right)}^{L} \left(x\right) where x = int \left(H\left(\left.Pk\right‖{S}_{puz}\right)\right) mod p .$

The value of *x* may be referref to herein as an intermediate value, and is based on the public key and the puzzle solution. *w* is the candidate proof, and may be described as being derived, by the challengee, by computing a series of square root computations. The computation of w by the challengee is described in more detail in section 5.1.

The time required to evaluate ${Π}_{Pk , {S}_{puz}}^{Sloth}$ depends linearly on the length of the chain *L.* Furthermore, ${Π}_{Pk , {S}_{puz}}^{Sloth}$ is resistant to parallel computation; there is no advantage in using parallel hardware to compute ${Π}_{Pk , {S}_{puz}}^{Sloth}$ faster.

In the following implementation, the hash function *H* is SHA256 applied twice. The locking script of a bounty transaction secured with a Sloth chain of length *L* can be constructed by adding the following opcodes.
1. Push the prime *p* to the stack:
   <*p*>
2. Verify that $w ∈ {ℤ}_{p}^{∗}$:
   OP_SWAP OP_DUP OP_DUP OP_0 OP_GREATERTHAN OP_SWAP OP_3
   OP_PICK OP_LESSTHAN OP_BOOLAND OP_VERIFY
3. Compute (*ρ* ∘ σ)*^{-L}*(*w*) by adding the following opcodes, for *j* = 0 to *L -* 1:
   i. Compute *ρ*⁻¹:
      OP_DUP OP_DUP OP_MUL OP_2 OP_PICK OP_MOD
      OP_SWAP OP_2 OP_MOD
      OP_IF OP_OVER OP_SWAP OP_SUB OP_ENDIF
   ii. Compute σ⁻¹:
      OP_1 OP_OVER OP_2 OP_MOD
      OP_IF OP_ADD OP_ELSE OP_SUB OP_ENDIF
4. Verify that (*ρ* ∘ *σ*)^{-L}(*w*) = int(*SHA*256 (*SHA*256(*Pk*∥*S_{puz}*))) mod *p*:
   OP_2OVER OP_CAT OP_HASH256 OP_ROT OP_MOD
   OP_NUMEQUALVERIFY
5. Verify that the puzzle solution *S_{puz}* is correct:
   [VerifyPuzzleSolution]
6. Verify that the signature is a valid signature for the transaction and the public key *Pk:*
   OP_CHECKSIG

That is, the locking script is configured to find the inverse of the function (*ρ* ∘ σ)*^{L}*, and thus derive the intermediate value x. The locking script is also configured to calculate the intermediate value x based on the public key and the puzzle solution. The proof criterion is satisfied, i.e. the proof verified, if the two computed intermediate values are equal.

The unlocking script of the redemption transaction would be as follows:
Unlocking script:
*<Sig_{Pk}> <Pk> <S_{puz}> <w>*

The unlocking script is valid if:
- The evaluation *w* of the Sloth chain on input *Pk*∥*S_{puz}* is correct, i.e.: *w* = (*ρ ∘* σ)*^{L}*(*x*) where *x* = int(*SHA*256 (*SHA*256(*Pk*∥*S_{puz}*))) mod *p*.
- The puzzle solution *S_{puz}* is correct (passes the VerifyPuzzleSolution check).
- The signature is a valid signature for the transaction and the public key *Pk.*

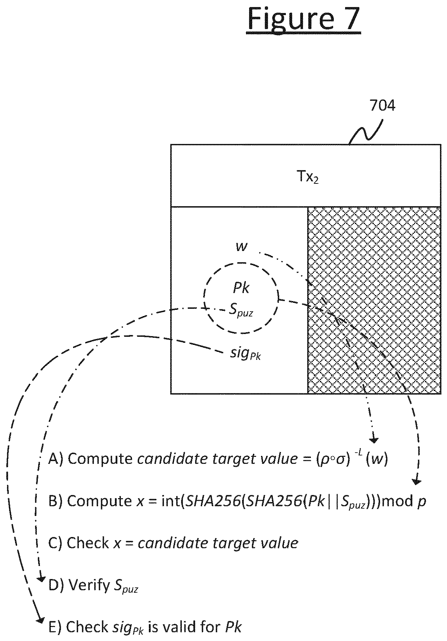

Figure 7 provides a schematic illustration of the method for verifying the unlocking script of the solution transaction 704.

The challenger 402 generates the challenge transaction with a locking script comprising a script for executing the following verification steps. The challengee 404 generates the solution transaction 704, with an unlocking script comprising the candidate puzzle solution *S_{puz},* the candidate proof w, and the challengee's public key *Pk.* The solution transaction 704 also comprises a signature *sig_{Pk}* derived from the challengee's public key *Pk.*

Then the locking script of the challenge transaction (not shown) and the unlocking script of the solution translation 704 are run together such that, and the steps A-E are performed in script.

First, as step A, the candidate target value is computed using the candidate proof value w by computing the inverse of the invertible function, i.e. (*ρ* ∘ *σ*)*^{-L}*(*w*)*.* It will be appreciated that the chain length *L* may be provided in the locking script of the challenge transaction as a challenge variable.

At step B, the intermediate value x is computed using the public key and the candidate puzzle solution of the solution transaction 704. It will be appreciated that the prime *p* may be provided in the locking script of the challenge transaction as a challenge variable.

The candidate target value and the computed intermediate value are then compared, step C, to determine if they meet the challenge criterion, i.e. that the two values are equal.

At step D, the candidate puzzle solution is verified for the puzzle defined by the challenger 402. The way in which the candidate puzzle is verified is dependent on the type of puzzle used. The skilled person will understand ways in which the candidate puzzle solution may be verified.

It is then determined if the signature of the solution transaction 704 is valid for the public key of the unlocking script, step E.

If each check is found to be valid, the locking script of the solution transaction 704 is determined to be valid and the UTXO of the challenge transaction unlocked.

The overhead in the redemption transaction is only one extra 2048-bit value *w* (for a prime *p* of size 2048 bits), the result of the evaluation of the Sloth chain. However, the size of the locking script of the bounty transaction that verifies w linearly depends on the length of the Sloth chain. For a chain of length *L* and a prime *p* of size *B* bytes, the size overhead in the bounty transaction is 17 + 23 × *L + B* bytes. Since the difficulty of Sloth depends linearly on the length of the chain, the size overhead in the bounty transaction grows linearly with the difficulty.

### 6.4 PROOF OF SEQUENTIAL WORK

In this scheme, the proof of sequential work described by Cohen and Pietrzak (CP-PoSW) is used as the proof of computation employed to secure a puzzle bounty. A CP-PoSW constitutes a proof of sequential computation, in the same way as a Sloth chain. In CP-PoSW, the difference between the evaluation and verification time is exponential in the difficulty, while this difference is only constant in the Sloth scheme (by a factor of *O*(log *p*)).

In a CP-PoSW, challenges label a directed acyclic graph *G* = (*V, E*) of *T* nodes which requires performing *T* sequential hash computation. Figure 3 shows an example graph 300 for use in such a scheme. The value $T ∈ ℕ$ may be referred to as the time parameter and it is of the form *T* = *2*^{*t*+1} - 1 for an integer $t ∈ ℕ$.

In the following implementation, the hash function used to label the graph *G* is the function *HASH256_{χ}: x* ↦ *SHA*256(*SHA256*(*χ*∥*x*)) with *χ = SHA*256(*SHA*256(*Pk*∥*S_{puz}*)), where *Pk* is the public key that signs the redemption transaction and *S_{puz}* is the solution to the puzzle whose bounty needs to be secured. *HASH256_{χ}* is assumed to be inherently sequential, meaning that computing a sequence *x*₁, *... , x_{T}* ∈ {0,1}* of length *T* where for each *i,* 1 ≤ *i < T, x*_{*i*+1} *= a*∥*HASH*256*_{χ}*(*xᵢ)*∥*b* for some *a, b* ∈ {0,1}* requires *T* sequential queries to *HASH256_{χ}.*

The label *lᵢ* of a node *i* ∈ *V* is computed as: ${l}_{i} = HASH {256}_{χ} \left(i\left‖{l}_{{p}_{1}}\right‖…\left‖{l}_{{p}_{d}}\right.\right) where \left({p}_{1},…,{p}_{d} \right) = parents \left(i\right) .$

The label *l*_{*p*₁} is the label of the node that was computed right before the current node. As explained in section 5.2, this prevents an adversary from exploiting the Merkle-Damgård construction of *SHA*256 to speed up the computation of the labels using parallel computation.

In the CP-PoSW, challengees commit to the labels of *V* by sending a Merkle-tree like commitment *ϕ*, similar to a Merkle root of a Merkle tree, of the labels of *V* to the verifier. In a non-interactive version of CP-PoSW, users (challengees) randomly sample k leaves *γᵢ* = *HASH256_{χ}*(*ϕ*∥*i*) mod 2*^{t}* for 1 ≤ *i* ≤ *k* and send a proof vector *π* = (*π*₁*,* ... , *πₖ*) to the verifier (challenger). For each 1 ≤ *i* ≤ *k, πᵢ* contains the opening of the label of leaf *γᵢ*. The proof vector may, therefore, be referred to as a set of openings corresponding to the directed acyclic graph *G.* The openings are similar to Merkle proofs corresponding to leaves of a Merkle tree. The graph *G* generated by the challengee may be referred to as a candidate directed acyclic graph *G.*

The verifier then resamples the *k* leaves *γ*₁, ... , *γₖ,* verify that their labels are computed correctly using the label of their parents, and verify that the openings are correct with respect to the commitment *ϕ* received initially. By verifying only a subset of the leaves of the candidate graph *G,* the verifier can verify that the challenger has satisfied the challenge criterion more quickly than if all leaves were verified. The challenger choses the value of *k* to be sufficiently large to ensure that the challengee has computed a large proportion of the label with a good probability.

It is noted that choosing a large value for *k* induces larger script sizes, and therefore there is a trade-off to be made between security and computational efficiency.

Given the solution to the puzzle *S_{puz},* the public key *Pk* that signs the redemption transaction, a security parameter $k ∈ ℕ$, and the graph *G* defined in CP-PoSW with time parameter $T = {2}^{t + 1} - 1 ∈ ℕ$ for some $t ∈ ℕ$, the proof ${Π}_{Pk , {S}_{puz}}^{PoSW}$ employed in this scheme can be formulated as follows:
${Π}_{Pk , {S}_{puz}}^{PoSW}$ : Compute the commitment *ϕ* and the opening of the labels of *γᵢ* = *int*(*HASH*256*_{χ}*(ϕ∥*i*)) mod 2*^{t}* in the graph G, for 1 ≤ *i* ≤ *k,* where *χ* = *SHA256* (*SHA256*(*Pk*∥*S_{puz}*)).

*χ* may be referred to herein as the intermediate value, and is calculated based on the public key and the puzzle solution.

[Opening *γᵢ*] denotes the script portion corresponding to *πᵢ* that contains the opening of the label of *γᵢ*. This script portion [Opening *γᵢ*] can be constructed as follows:
1. Add the opening of the label of *γᵢ*, i.e, all labels of the siblings of the nodes on the path from *γᵢ* to the root. The labels are ordered in ascending order of their height in the tree (first the label at height 1, then 2, and so on...). For e.g., if *γᵢ* = 0011 (cf. Figure 1), then add *l*₁, *l*₀₁, *l*₀₀₀, and then *l*₀₀₁₀.
2. Add the label *l*_{*γ*ᵢ} of*γᵢ*.
3. Add the identifier *γᵢ*.
$\begin{matrix}\left[Opening {γ}_{i}\right] : = \left〈{l}_{\left(1-{γ}_{i}\left[0\right]\right)}\right〉 \left〈{l}_{{γ}_{i} \left[0\right] \left‖\left(1-{γ}_{i}\left[1\right]\right)\right.}\right〉 \left〈{l}_{{γ}_{i} \left[0…1\right] \left‖\left(1-{γ}_{i}\left[2\right]\right)\right.}\right〉 … \left〈{l}_{{γ}_{i} \left[0…t-2\right] \left‖\left(1-{γ}_{i}\left[t-1\right]\right)\right.}\right〉 \left〈{l}_{{γ}_{i}}\right〉 \\ \left〈{γ}_{i}\right〉\end{matrix}$

In the implementation described here, the identifier of a node is the integer value of the identifier in big-endian format defined in CP-PoSW (see section 5.2). In the previous example, *γᵢ* would be equal to 3, instead of 0011 as defined in CP-PoSW. This implies that multiple nodes at different levels of the tree can have the same identifier. Even if multiple nodes have the same identifier, their label will be different because their parents are different. Thus, having multiple nodes sharing the same identifier should not make it possible for a user to speed up the computation of the labels of the graph.

The graph *G* used in CP-PoSW is such that the labels of the parents of *γᵢ* are included in the opening of the label of *γᵢ*. Their position in [Opening *γᵢ*] corresponds to the position of the 1's in the binary representation of *γᵢ*, when counting from 0 from left to right. For example, referring to the graph 300 of Figure 3, for *γᵢ* = 3 in the fourth level of the tree (represented in binary form as 0011) 302, the parent labels appear in position 2 and 3 in [Opening *γᵢ*], which indeed correspond to *l*₀₀₀ 306 and *l*₀₀₁₀ 304.

[*HASH*256*_{χ}*] is denoted by the script portion that implements the function *HASH*256*_{χ}.* It is assumed that the three elements at the bottom of the main stack are: *<Sig_{Pk}>* (at the bottom), *<Pk>,* and *<S_{puz}>.* 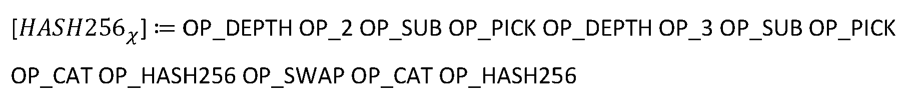 [HASH256χ] := OP_DEPTH OP_2 OP_SUB OP_PICK OP_DEPTH OP_3 OP_SUB OP_PICK OP_CAT OP_HASH256 OP_SWAP OP_CAT OP_HASH256

[VerifyOpening *γᵢ*] is denoted by the script portion that verifies the opening of *γᵢ* contained in [Opening *γᵢ*], for some challenge leaf *γᵢ*. In the following, it is assumed that the Merkle tree-like commitment *ϕ* is at the top of the alt stack. Moreover, it is assumed that the three elements at the bottom of the main stack are: *<Sig_{Pk}>* (at the bottom), *<Pk>,* and *<sol>* (at the top).

The script portion [VerifyOpening *γᵢ*] can be constructed as follows, for some 1 ≤ *i* ≤ *k:*
1. Verify that the challenge leaf *γᵢ* was sampled correctly as *γᵢ* = *int*(*HASH256χ*(*ϕ*∥*i*)) mod 2*^{t}*:
   OP_DUP OP_FROMALTSTACK OP_DUP OP_TOALTSTACK <i> OP_CAT
   [*HASH256_{χ}*] <0x00> OP_CAT <2*^{t}*> OP_MOD OP_NUMEQUALVERIFY
2. Push the parents of *γᵢ* to the alt stack. The position of the 1's in the binary representation of *γᵢ* is used to locate its parents:
   i. Push the flag -1 to the alt stack:
      OP_1NEGATE OP_TOALTSTACK
   ii. Add the following opcodes, for *j = t -* 1 to 0:

      ```
               OP_DUP <2j> OP_DIV OP_2 OP_MOD OP_0NOTEQUAL
               OP_IF
                  <j + 2> OP_PICK OP_TOALTSTACK
               OP_ENDIF
```
3. Verify that the label *l_{γᵢ}* of *γᵢ* has been correctly computed using the label of its parents:
   i. Initialise:
      OP_DUP OP_FROMALTSTACK
   ii. For *j* = 0 to *t -* 1, add the following opcodes:

      ```
               OP_DUP OP_1NEGATE OP_EQUAL
               OP_NOTIF
                  OP_CAT OP_FROMALTSTACK
               OP_ENDIF
```
   iii. Finalise:
      OP_DROP [*HASH256_{χ}*] OP_2 OP_PICK OP_EQUALVERIFY
4. Verify that the openings of the commitment are correct:
   i. For *j* = 1 to *t -* 1, add the following opcodes:
      OP_DUP OP_2 OP_DIV
      OP_DUP OP_0NOTEQUAL OP_NOTIF OP_DROP <0x00> OP_ENDIF
      OP_TUCK OP_TOALTSTACK OP_TOALTSTACK
      OP_ROT OP_ROT
      OP_FROMALTSTACK OP_2 OP_MOD OP_IF OP_SWAP OP_ENDIF
      OP_CAT OP_CAT [*HASH*256*_{χ}*]
      OP_FROMALTSTACK
   ii. Calculate the candidate commitment *I_{ε}*:
      OP_2 OP_MOD OP_IF OP_SWAP OP_ENDIF
      OP_CAT [*HASH*256*_{χ}*]
   iii. Verify that the calculated candidate commitment *l_{ε}* is equal to *ϕ*:
      OP_FROMALTSTACK OP_DUP OP_TOALTSTACK OP_EQUALVERIFY

The complete locking script of a bounty transaction secured with CP-PoSW is as follows:
Locking script:
OP_TOALTSTACK [VerifyOpening *γ*₁] [VerifyOpening *γ*₂] ...[VerifyOpening γ*ₖ*] OP_FROMALTSTACK OP_DROP [VerifyPuzzleSolution] OP_CHECKSIG

The unlocking script of the redemption transaction would be as follows:
Unlocking script:
*<Sig_{Pk}> <Pk> <S_{puz}>* [Opening *γₖ*] [Opening *γ*ₖ₋₁] ... [Opening *γ*₁] <*ϕ*>

The unlocking script is valid if:
- Each opening of the labels of *γ*₁, *... , γₖ* is valid.
- The puzzle solution *S_{puz}* is correct (passes the VerifyPuzzleSolution check).
- The signature is a valid signature for the transaction and the public key *Pk.*

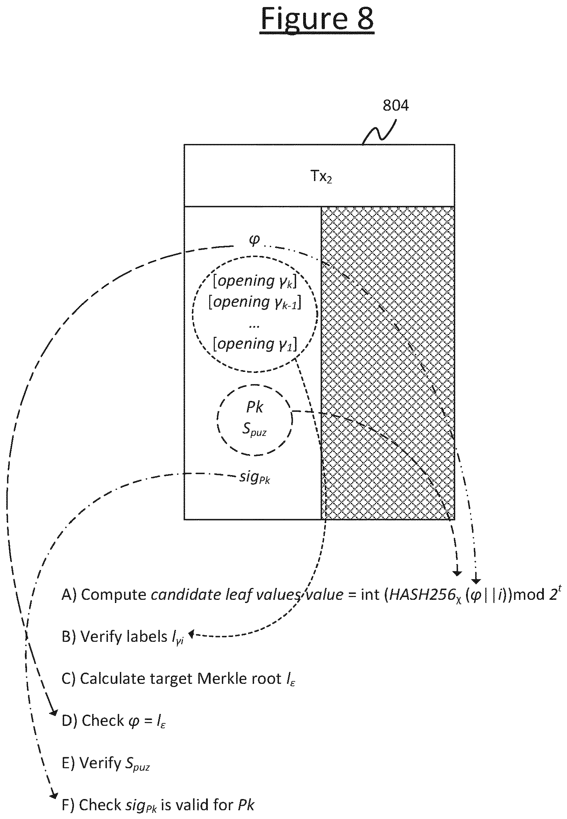

Figure 8 shows schematically the method for verifying the unlocking script of the solution transaction 804.

The challenger 402 generates the challenge transaction (not shown) with a locking script comprising a script for executing the following verification steps. The challengee 404 generates the solution transaction 804, with an unlocking script comprising the candidate puzzle solution *S_{puz},* the candidate proof [Opening *γₖ*] [Opening *γ*_{*k*-1}] ... [Opening *γ*₁] <*ϕ*>, and the challengee's public key *Pk.* The solution transaction 704 also comprises a signature *sig_{Pk}* derived from the challengee's public key *Pk.*

The locking script of the challenge transaction and the unlocking script of the solution translation 804 are run together, such that the steps A-F are performed in script.

First, at step A, the candidate leaf values *γᵢ* are computed using the commitment *ϕ*. It will be appreciated that the parameter *t* may be provided in the locking script of the challenge transaction as a challenge variable. The intermediate value *χ* may also be calculated based on the candidate puzzle solution and the public key. The candidate leaf values are compared to the leaf values of the candidate graph *G* to verify that the leaves have been sampled correctly.

At step B, the labels *l_{γᵢ}* of *γᵢ* are verified by checking that each label *l_{γᵢ}* has been correctly computed using the label of its parents.

The openings of the commitment are then verified by computing a target commitment *l_{ε}* based on the openings of the solution transaction 804, step C, and comparing the target commitment *l_{ε}* to the candidate commitment *ϕ* of the solution transaction 804, step D.

At step E, the candidate puzzle solution is verified for the puzzle defined by the challenger 402. The way in which the candidate puzzle is verified is dependent on the type of puzzle used. The skilled person will understand ways in which the candidate puzzle solution may be verified.

It is then determined if the signature of the solution transaction 804 is valid for the public key of the unlocking script, step F.

If each check is found to be valid, the locking script of the solution transaction 804 is determined to be valid and the UTXO of the challenge transaction unlocked.

Each leaf in *G* can be identified using at most $\left⌈t/8\right⌉$ bytes and each label is of size 32 bytes. Therefore, the size overhead in the redemption transaction is *k* × *size_{opening}* bytes where *size_{opening}* ≈ 32 × *t.* The size overhead in the bounty transaction is *k* × *size*_{*verify*_*opening*} bytes where *size_{verify-opening}* ≈ 70 + 54 × *t*. Since the difficulty of CP-PoSW depends exponentially on the parameter *t*, the size overhead in the bounty and redemption transaction grows logarithmically with the difficulty.

### 6.5 VERIFIABLE DELAY FUNCTION

In this scheme, Pietrzak's VDF (P-VDF) is used, as set out in section 5.3, as the proof of computation employed to secure a puzzle bounty. A P-VDF consists in computing a value $y = {H}_{G} {\left(x\right)}^{{2}^{T}}$ for some input *x* ∈ {0,1}*, time parameter $T ∈ ℕ$, and hash function ${H}_{G} : \left\{0, 1\right\} * \to G$, and generating a proof π that the value *y* has been correctly computed. In order to secure the puzzle solution *S_{puz},* this scheme requires users to evaluate a P-VDF on challenge (*x, T*) where *x* is the concatenation of *S_{puz}* and the public key *Pk* that signs the redemption transaction, and may be referred to as the intermediate value. *y* may be referred to herein as a result value.

A P-VDF based scheme works as follows. The challenger selects the security parameter *λ*, the time parameter *T*, and runs a SETUP procedure that outputs a description of the group 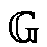 in which operations are performed and a hash function ${H}_{G} : \left\{0, 1\right\} * \to G$. To simplify, we assume that *T =* 2*^{t}* for some $t ∈ ℕ$ is a power of two in the rest of this section. Evaluating a P-VDF consists in performing *T* squaring operations to compute $y = {H}_{G} {\left(x\right)}^{{2}^{T}}$. Like the Sloth scheme and CP-PoSW, evaluating a P-VDF is an inherently sequential problem and therefore constitutes a proof of sequential computation whose evaluation cannot be sped up by parallel computation.

In addition to the result value *y* of the evaluation of the P-VDF, a proof *π* composed of log₂ *T* elements *µ*₁, ..., *µₜ* is attached to prove that *y* has been correctly computed. The proof may be referred to as comprising a sequence of proof values *µᵢ*.

In order to verify it, the challenger needs to perform 2 log₂ *T* exponentiations, as detailed in section 5.3. Like the CP-PoSW, a P-VDF achieves an exponential gap between the evaluation and verification time of the proof.

Given the solution to the puzzle *S_{puz},* the public key *Pk* that signs the redemption transaction, a hash function *H,* and a time parameter $T = {2}^{t} ∈ ℕ$ for some $t ∈ ℕ$, the proof ${Π}_{Pk , {S}_{puz}}^{VDF}$ employed in this scheme can be formulated as follows:
${Π}_{Pk , {S}_{puz}}^{VDF}$: Compute the result $y = {H}_{G} {\left(x\right)}^{{2}^{T}}$ and the proof *π* = {*µᵢ*}_{*i*∈[*t*]} that *y* has been correctly computed, where *x = Pk*∥*S_{puz}.*

*x* may be referred to as the intermediate value. The result value *y* is computed by the challengee based on the intermediate value and as a result of a sequence of squaring operations, as set out in section 5.3. Each proof value is derived from a hash of the intermediate value.

### Parameter Setup

Depending on the setting used, the order of the group 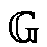 in which operations are performed can be either known to the challenger or not. For a discussion on the choice of the group, see section 5.3. In the following, all operations are performed in the group ${G}_{N} = {ℤ}_{N}^{∗} \ \left\{\pm 1\right\}$. The challenger is assumed to be trusted and immediately forgets the factorisation of the parameter *N = pq* after generating it. As explained in section 5.3, a malicious challenger who knows the order of the group could evaluate the P-VDF for any input *x* in *O*(log₂ *T*) steps, instead of *O*(*T*), thus being able to intercept and steal the puzzle bounty easily. The following implementation can be adapted to other groups, such as the class group of imaginary quadratic field that does not require the challenger to be trusted.

For a good level of security, *N* should be of size at least *λ_{RSA}* = 2048 bits. The hash function ${H}_{{G}_{N}} : \left\{0, 1\right\} * \to {G}_{N}$ can be constructed by evaluating SHA256 on the input concatenated with a counter $c ∈ ℕ$: ${H}_{{G}_{N}} \left(x\right) = int \left[SHA256\left(SHA256\left(\left.x\right‖c\right)\right)\right] mod N ,$ where *x = Pk*∥*S_{puz}* and $c ∈ ℕ$ is the first integer such that the output value is in ${G}_{N}$. The probability that a random value $c ′ ∈ ℕ$ yields an element in ${G}_{N}$ is *φ*(*N*)/*N*, which is close to 1 when *N* is large. Therefore, it only requires a few trials to find a suitable value *c.*

In the non-interactive version of P-VDF, a hash function *hash* is used to generate the challenge *r.* Depending on the security level desired, the hash function *hash* used in Bitcoin script can either be *RIPEMD*160 o *SHA*256 (for *λ* = 160) or SHA256 ∘ *SHA*256 (for *λ* = 256). In the following, *λ* is selected to be equal to 256 and use *SHA*256 ∘ SHA256.

### Verification Script

[ModExponentiate] denotes the script portion that takes as input *x, a, n* and returns *x^{a}* mod *n* (the implementation is detailed later). The locking script that implements the verification of a P-VDF evaluation can be constructed as follows:
1. Push *N* to the main stack:
   *<N>*
2. Check that ${μ}_{1} , … , {μ}_{t} ∈ {G}_{N}$ (by checking that 1 < *µᵢ < N* - 1 and ${μ}_{i} ⋅ {μ}_{i}^{- 1} ≡ 1 mod N$ ), and push them to the alt stack, by copying *t* times:
   OP_SWAP OP_2 OP_PICK OP_DUP OP_DUP OP_1 OP_GREATERTHAN
   OP_VERIFY OP_3 OP_PICK OP_1SUB OP_LESSTHAN OP_VERIFY OP_MUL
   OP_OVER OP_MOD OP_1 OP_NUMEQUALVERIFY OP_SWAP
   OP_TOALTSTACK
3. Push *T* to the alt stack:
   <*T*> OP_TOALTSTACK
4. Check that ${y}_{1} ∈ {G}_{N}$ (by checking that 1 *< y*₁ *< N -* 1 and ${y}_{1} ⋅ {y}_{1}^{- 1} ≡ 1 mod N$ ), and push it to the alt stack:
   OP_SWAP OP_2 OP_PICK OP_DUP OP_DUP OP_1 OP_GREATERTHAN
   OP_VERIFY OP_3 OP_PICK OP_1SUB OP_LESSTHAN OP_VERIFY OP_MUL
   OP_OVER OP_MOD OP_1 OP_NUMEQUALVERIFY OP_SWAP
   OP_TOALTSTACK
5. Compute ${g}_{1} = {H}_{{G}_{N}} \left(Pk\left‖sol\right.\right)$ (by computing ${H}_{{G}_{N}} \left(x\right) = int \left[SHA256\left(SHA256\left(x\left‖c\right.\right)\right)\right] mod N$ ):
   OP_SWAP OP_TOALTSTACK OP_TOALTSTACK OP_3DUP OP_CAT OP_CAT
   OP_HASH256 <0x00> OP_CAT OP_FROMALTSTACK OP_TUCK OP_MOD
6. Check that ${g}_{1} ∈ {G}_{N}$ (by checking that 1 < *g₁ < N -* 1 and ${g}_{1} ⋅ {g}_{1}^{- 1} ≡ 1 mod N$ ), :
   OP_DUP OP_DUP OP_DUP OP_1 OP_GREATERTHAN OP_VERIFY OP_3
   OP_PICK OP_1SUB OP_LESSTHAN OP_VERIFY OP_FROMALTSTACK OP_MUL
   OP_2 OP_PICK OP_MOD OP_1 OP_NUMEQUALVERIFY
7. Pull *y*₁ from the alt stack:
   OP_FROMALTSTACK
8. Repeat for *i* = 1, ..., *t:*
   - Compute *rᵢ* = *int* [*SHA*256 (*SHA*256(*T*/*2*^{*i*-1}∥*gᵢ*∥*yᵢ*∥*µ*ᵢ))]:
      OP_FROMALTSTACK OP_FROMALTSTACK OP_SWAP OP_DUP OP_2
      OP_DIV OP_TOALTSTACK OP_SWAP OP_2SWAP OP_ROT OP_SWAP
      OP_3DUP OP_TOALTSTACK OP_TOALTSTACK OP_TOALTSTACK OP_CAT
      OP_CAT OP_CAT OP_HASH256 <0x00> OP_CAT
   - Compute ${g}_{i + 1} = {g}_{i}^{{r}_{i}} ⋅ {μ}_{i} mod N$:
      OP_DUP OP_FROMALTSTACK OP_SWAP OP_3 OP_PICK
      [ModExponentiate] OP_FROMALTSTACK OP_DUP OP_TOALTSTACK
      OP_MUL OP_2 OP_PICK OP_MOD
   - Compute ${y}_{i + 1} = {μ}_{i}^{{r}_{i}} ⋅ {y}_{i} mod N$:
      OP_FROMALTSTACK OP_ROT OP_3 OP_PICK [ModExponentiate]
      OP_FROMALTSTACK OP_MUL OP_2 OP_PICK OP_MOD
9. Check whether ${y}_{t + 1} ≡ {g}_{t + 1}^{2} mod N$ :
   OP_SWAP OP_DUP OP_MUL OP_2 OP_ROLL OP_MOD
   OP_NUMEQUALVERIFY OP_DROP
10. Verify that the puzzle solution *S_{puz}* is correct:
   [VerifyPuzzleSolution]
11. Verify that the signature is a valid signature for the transaction and the public key *Pk:*
   OP_CHECKSIG

The corresponding unlocking script would be as follows:
Unlocking script: $\left〈{sig}_{Pk}\right〉 \left〈Pk\right〉 \left〈{S}_{puz}\right〉 \left〈c\right〉 \left〈{g}^{- 1}\right〉 \left〈{y}_{1}\right〉 \left〈{y}_{1}^{- 1}\right〉 \left〈π\right〉 : = \left[\left〈{μ}_{1}\right〉\left〈{μ}_{1}^{- 1}\right〉\left〈{μ}_{2}\right〉\left〈{μ}_{2}^{- 1}\right〉…\left〈{μ}_{t}\right〉\left〈{μ}_{t}^{- 1}\right〉\right]$

That is, the locking script is configured to compute a series of first exponentials *gᵢ* and a series of second exponentials *yᵢ* for 1 ≤ *i* ≤ *t*+1. A first of the first exponentials *g*₁ is calculated based on the public key and the puzzle solution. A first of the second exponentials *y*₁ is the result value provided in the unlocking script.

Each of the subsequent first and second exponential *gᵢ, yᵢ* are calculated using a previous one of the first and second exponentials *g*_{*i*-1}, *y*_{*i*-1}, and a respective previous one of the proof values *µ*_{*i-*1}. That is, all previous values of both the first and second series of exponentials are needed to calculate the next exponential in each series.

The proof is verified if a final second exponential *y*_{*t*+1} is equal to the square of a final first exponential *g*_{*t*+1} mod *N.*

The unlocking script is valid if:
- The proof *π* that $y = {H}_{{G}_{N}} {\left(x\right)}^{{2}^{T}}$ where *x = Pk*∥*S_{puz}* is a valid P-VDF proof.
- The puzzle solution *sol* is correct (passes the VerifyPuzzleSolution check).
- The signature is a valid signature for the transaction and the public key *Pk.*

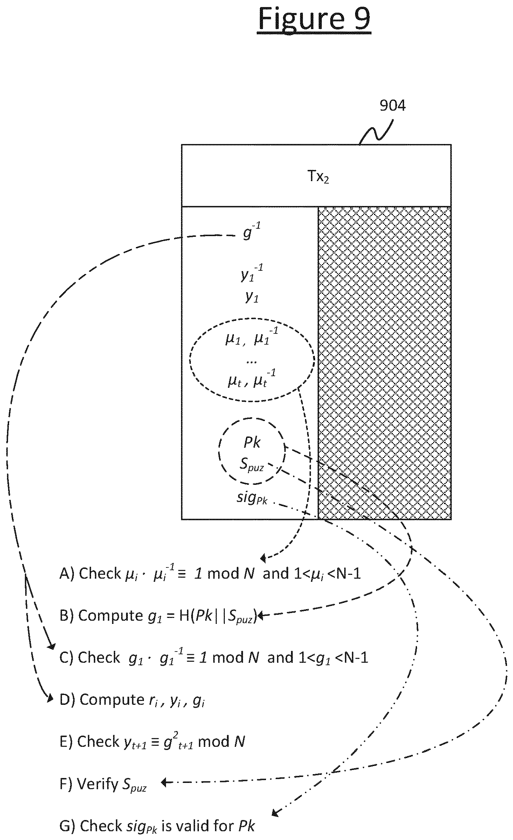

Figure 9 shows schematically the method for verifying the unlocking script of the solution transaction 904.

The challenger 402 generates the challenge transaction (not shown) with a locking script comprising a script for executing the following verification steps. The challengee 404 generates the solution transaction 904, with an unlocking script comprising the candidate puzzle solution *S_{puz},* the candidate proof *π* and the challengee's public key *Pk.* The solution transaction 904 also comprises a signature *sig_{Pk}* derived from the challengee's public key *Pk.*

The locking script of the challenge transaction and the unlocking script of the solution translation 904 are run together, such that the steps A-G are performed in script. The locking script may also comprise the time parameter *T* and the value *N.*

First, at step A, the proof values *µᵢ* are checked.

At step B, a first first exponential *gᵢ* is calculated using the public key and the candidate puzzle solution. The first first exponential is then checked using the inverse of the first first exponential provided in the solution transaction 904, step C.

At step D, the series of first exponentials *gᵢ*, second exponentials *yᵢ*, and *rᵢ* values are computed using the equations set out in step 8 above.

The final second exponential *y*_{*t*+1} is compared to a square of the final first exponential *g*_{*t*+1} to determine if the challenge criterion is satisfied, step E.

At step F, the candidate puzzle solution is verified for the puzzle defined by the challenger 402. The way in which the candidate puzzle is verified is dependent on the type of puzzle used. The skilled person will understand ways in which the candidate puzzle solution may be verified.

It is then determined if the signature of the solution transaction 804 is valid for the public key of the unlocking script, step G.

If each check is found to be valid, the locking script of the solution transaction 904 is determined to be valid and the UTXO of the challenge transaction unlocked.

If it is assumed that *N* is of size 256 bytes and c is of size 1 byte, then the size overhead in the redemption transaction is 767 + 512 × *t* bytes. As described below, the size of [ModExponentiate] is 6921 bytes for a 256-bit exponent. If it is assumed that *N* is of size 256 bytes, then the size overhead in the bounty transaction is roughly 13904 × *t* bytes. Since the difficulty of P-VDF depends exponentially on the parameter *t*, the size overhead in the bounty and redemption transaction grows logarithmically with the difficulty.

### Modular Exponentiation In-script

In the following, the portion [ModExponentiate] that performs modular exponentiation in script is described. The value *x^{a}* mod *n* can be computed with the square and multiply algorithm. The following assumptions are made:
- The value *x* to be exponentiated is such that 0 *< x < n.*
- The size of *a* is known.
- The modulus *n* is strictly larger than 1.

To compute *x^{a}* mod *n,* all squarings *x²ⁱ* are iteratively computed and the result *res* multiplied by the i-th squaring only if the i-th bit of *a* is set. At the end, output *res = x^{a}* mod *n.*

Starting with *x, a, n* on top of the stack, the script to compute *x^{a}* mod *n,* where *a* is expressed using k bits, is constructed using the following opcodes:
1. Initialise the result *res* to 1:
   OP_ROT OP_ROT OP_1 OP_ROT OP_ROT OP_DUP
2. For i = 0 to k, add opcodes:

   ```
             OP_IF
                  OP_DUP OP_2 OP_MOD // Calculate a mod 2
                  OP_SWAP OP_2 OP_DIV OP_TOALTSTACK // Perform integer division
             of a by 2 and store value to alt stack
                  OP_IF // If a mod 2 == 1
                        OP_DUP OP_ROT OP_MUL OP_2 OP_PICK OP_MOD OP_SWAP
                  OP_DUP OP_MUL OP_2 OP_PICK OP_MOD
                  OP_FROMALTSTACK OP_DUP
             OP_ELSE
                  OP_0
```
3. Finalise by cleaning-up the stack:
   OP_2DROP OP_DROP OP_NIP

Each iteration takes 27 bytes. For a *k*-bit exponent *a*, step 2. above takes 27 × *k* bytes. Adding 6 bytes of initialisation (step 1.) and 3 bytes for cleaning-up the stack (step 3.), the script has total size 9 + 27 × *k* bytes.

### 6.6 SCHEME CHOICE

The schemes presented herein secure puzzle bounties by requiring users (challengees) to provide some proof of computation (the proof) tied to the solution of the puzzle and the public key that signs the redemption transaction. The proof of computation ensures that some amount of time has passed since the solver found the puzzle solution and is also required for a malicious user that intercepts the solution.

Three security levels to secure a puzzle bounty may be defined. These security levels correspond to the amount of time required to generate the proof of computation:
- Base security - 10 seconds: this roughly corresponds to the time it takes for a transaction to propagate to the whole network. If a malicious user broadcasts an alternative redemption transaction, then this transaction will be considered as invalid since the first legitimate transaction was already received by the nodes. However, this does not prevent a malicious miner to reject the first legitimate redemption transaction and mine a block containing an alternative redemption transaction. In Bitcoin SV, such a behaviour would be detected by other miners through the double-spend prevention mechanism.
- Medium security - 10 minutes: this corresponds to the average time it takes for the network to mine a new block. This security level guarantees that if the legitimate redemption transaction is included in the next block, then the only way for a malicious attacker to hijack the puzzle bounty is to create a new branch containing an alternative redemption transaction. Again, the double-spend prevention mechanism in Bitcoin SV would allow miners to detect and signal to the network such a behavior.
- Maximal security - 70 minutes: after this time, the transaction will be included in a block and on average six subsequent blocks will be appended to the blockchain after it. This security level ensures that any attempt to steal the puzzle bounty will fail with very high probability.

These time durations depend on the amount of hardware (in proofs of parallelisable computation) or speed of hardware (in proofs of sequential computation) of users. Therefore, these security levels are relative to the adversary against which the puzzle bounty needs to be secured.

For schemes based on proofs of parallelisable computation, it is hard to define the parameters of the scheme corresponding to a particular security level because the evaluation time of the scheme can always be reduced by increasing the amount of parallel hardware. In practice, it is assumed that the solver has access to a modern GPU unit. The hash rate of most GPU units available today is below 1 GH/s. If the adversary has access to an application-specific integrated circuit (ASIC) machine that can compute 10 TH/s (corresponding to current state-of-the-art ASIC machines), then the solver would have to spend at least 10,000 times longer than the time defined in the security level to compute the proof of computation.

For schemes based on proofs of sequential computation, there exists a theoretical lower bound on the computational gap between a solver and the adversary, based on the physical hardware limits. Some works have been conducted to design low latency modular squaring for large integers. These can be used to estimate the practical lower-bound for VDFs evaluation time. An ASIC implementation may achieve a latency reduction of about 200x to evaluate a VDF on a 2048-bit input compared to modern CPU processors. This means that to achieve a particular security level, the solver would have to spend 200 times longer on evaluating the VDF.

The solver (challengee) can also outsource the generation of the proof of computation to an external server that has access to more powerful hardware. Since the inputs to the proofs of computation do not contain the puzzle solution in clear (but only a hashed version of it), the server learns nothing about the solution and cannot reuse it to claim the puzzle bounty in place of the legitimate solver.

The following table summarises the characteristics of each scheme described in this paper. If no resistance to parallel computing is required, then PoW should be chosen as it induces only a constant, small overhead in the size of the bounty and redemption transaction. When resistance to parallel computing is required, then CP-PoSW and P-VDF are preferred choices for high level of security because the size of the bounty and redemption transaction grow logarithmically with the evaluation time. However, the Sloth scheme is a good choice when the size overhead in the redemption transaction is required to be minimal.

| | **Resistance to parallel computing** | **Size of bounty tx vs. evaluation time *t*** | **Size of redemption tx vs. evaluation time *t*** |
|---|---|---|---|
| **PoW** | No | *O*(1) | *O*(*1*) |
| **Chained PoW** | Limited | *O*(*t*) | *O*(*t*) |
| **Sloth** | Yes | *O*(*t*) | *O*(1) |
| **CP-PoSW** | Yes | *O*(log(*t*)) | *O*(log(*t*)) |
| **P-VDF** | Yes | *O*(log(*t*)) | *O*(log(*t*)) |

Each scheme based on proof of sequential computation was evaluated and the respective bounty and redemption transaction were generated. The evaluations were performed on a Linux machine with 32 GB of RAM and a CPU running at 1.7 GHz. The table below shows the resulting size overhead of the schemes for multiple evaluation times, corresponding to the different levels of security. Note that in practice, the schemes would be run on a more powerful machine and therefore the scripts would be larger. From this table, it appears that the Sloth scheme is only interesting for low levels of security and if the size overhead in the redemption transaction should be minimal. However, higher levels of security induce a significant overhead in the bounty transaction. On the other hand, the size overhead in the CP-PoSW and P-VDF schemes grows slowly (in fact logarithmically) with the evaluation time. The differences between the two is that the P-VDF scheme induces a smaller overhead in the redemption transaction but conversely a higher overhead in the bounty transaction compared to the CP-PoSW scheme. It is also worth noting that the size overhead in the bounty and redemption transaction is more balanced in the CP-PoSW scheme.

| | ~10 seconds | | ~10 minutes | | ^{~}70 minutes | |
|---|---|---|---|---|---|---|
| | *Bounty Tx* | *Redemptio n Tx* | *Bounty Tx* | *Redemptio n Tx* | *Bounty Tx* | *Redemptio n Tx* |
| Sloth **(\|*p*\|** = **2048)** | 6 kB | 260 B | 35 kB | 260 B | 245 kB | 260 B |
| CP-PoSW ***(k*** = **150)** | 143 kB | 85 kB | 188 kB | 110 kB | 206 kB | 120 kB |
| P-VDF **(λ*_{RSA}*** = **2048)** | 280 kB | 11 kB | 362 kB | 14 kB | 403 kB | 16 kB |

### 7. FURTHER REMARKS

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

Some embodiments have been described in terms of the blockchain network implementing a proof-of-work consensus mechanism to secure the underlying blockchain. However proof-of-work is just one type of consensus mechanism and in general embodiments may use any type of suitable consensus mechanism such as, for example, proof-of-stake, delegated proof-of-stake, proof-of-capacity, or proof-of-elapsed time. As a particular example, proof-of-stake uses a randomized process to determine which blockchain node 104 is given the opportunity to produce the next block 151. The chosen node is often referred to as a validator. Blockchain nodes can lock up their tokens for a certain time in order to have the chance of becoming a validator. Generally, the node who locks the biggest stake for the longest period of time has the best chance of becoming the next validator.

## Claims

1. A computer-implemented method for generating a challenge blockchain transaction (502, 602), wherein the challenge blockchain transaction (502, 602) is associated with a puzzle and a proof criterion, wherein the puzzle is satisfied by a puzzle solution, and wherein the proof criterion is satisfied by a proof, the method comprising:
generating a first locking script of the challenge blockchain transaction (502, 602) which, when executed with a first unlocking script of a solution blockchain transaction (504, 604, 704, 804, 904) comprising a candidate puzzle solution, a public key, a candidate proof, and a signature generated for the solution blockchain transaction (504, 604, 704, 804, 904) is configured to:
verify that the candidate puzzle solution satisfies the puzzle;
verify that the signature is valid for the public key; and
verify that the candidate proof satisfies the proof criterion, wherein the proof criterion requires that the candidate proof is derived from the candidate puzzle solution and the public key; and
making the challenge blockchain transaction (502, 602) available to one or more nodes (104) of a blockchain network (150).

2. The method of claim 1, wherein the proof criterion defines a threshold value, wherein the proof criterion is satisfied if a candidate target value is less than or equal to the threshold value.

3. The method of claim 2, wherein the first locking script, when executed with the first unlocking script, is further configured to compute the candidate target value based on the public key, the candidate puzzle solution, and the candidate proof.

4. The method of claim 2, wherein the candidate proof comprises a sequence of candidate proof values, wherein the first locking script, when executed with the first unlocking script, is further configured to compute a corresponding sequence of candidate target values by:
calculating a first candidate target value based on the public key, the candidate puzzle solution, and a first candidate proof value of the sequence of candidate proof values; and
at least one subsequent candidate target values, wherein each subsequent candidate target value is calculated based on a corresponding one of the candidate proof values and a directly previous candidate target value in the sequence of candidate target values.

5. The method of claim 1, wherein the candidate proof is defined by an invertible function and computed based on a series of square root computations, wherein the first locking script is further configured to compute a candidate target value, wherein the candidate target value is an inverse of the invertible function.

6. The method of claim 5, wherein the candidate proof is computed based on an intermediate variable, wherein the intermediate variable is derivable from the public key and the candidate puzzle solution, wherein the first locking script is further configured to compute the intermediate variable based on the public key and the candidate puzzle solution of the first unlocking script, wherein the proof criterion is satisfied if the candidate target value is equal to the computed intermediate variable.

7. The method of claim 1, wherein the proof criterion corresponds to a directed acyclic graph, wherein the candidate proof comprises a set of openings and a commitment, wherein the first locking script is further configured to verify that the candidate proof of the first unlocking script is valid for the directed acyclic graph.

8. The method of claim 1, wherein the candidate proof comprises a sequence of proof values and a result value, wherein the result value is calculated based on a sequence of squaring operations, wherein the first locking script is further configured to:
compute a series of first exponentials; and
compute a series of second exponentials;
wherein a first of the series of first exponentials is computed based on the candidate puzzle solution and the public key;
wherein a first of the series of second exponentials is equal to the result value;
wherein each subsequent exponential of the series of first exponentials is computed based on a corresponding previous one of the sequence of proof values, a corresponding previous one of the series of first exponentials, and a corresponding previous one of the series of second exponentials; and
wherein subsequent each exponential of the series of second exponentials is computed based on a corresponding previous one of the sequence of proof values, a corresponding previous one of the series of first exponentials, and a corresponding previous one of the series of second exponentials.

9. A computer-implemented method for generating a solution blockchain transaction (504, 604, 704, 804, 904), wherein a first unlocking script of the solution blockchain transaction (504, 604, 704, 804, 904) is configured to unlock a first transaction output of a challenge blockchain transaction (502, 602), wherein the challenge blockchain transaction (502, 602) is associated with a puzzle and a proof criterion, wherein the puzzle is satisfied by a puzzle solution, and wherein the proof criterion is satisfied by a proof, the method comprising:
generating the first unlocking script, wherein the first unlocking script comprises:
a candidate puzzle solution for satisfying the puzzle;
a signature of the solution blockchain transaction;
a public key for generating the signature; and
a candidate proof, wherein the candidate proof is derived from the candidate puzzle solution and the public key; and
making the solution blockchain transaction (504, 604, 704, 804, 904) available to one or more nodes (104) of a blockchain network (150).

10. The method of claim 9, wherein the proof criterion defines a threshold value, wherein the proof criterion is satisfied if a candidate target value is less than or equal to the threshold value, wherein the method further comprises determining the candidate proof which, when used to derive the candidate target value, satisfies the proof criterion.

11. The method of claim 10, wherein the candidate target value is derived based on the candidate proof, the candidate puzzle solution, and the public key.

12. The method of claim 9, wherein the proof criterion defines a threshold value, wherein the candidate proof comprises a sequence of candidate proof values, wherein the proof criterion is satisfied if each of a sequence of candidate target values is less than or equal to the threshold value, wherein the sequence of candidate target values comprises:
a first candidate target value calculated based on the public key, the candidate puzzle solution, and a first candidate proof value of the sequence of candidate proof values; and
at least one subsequent candidate target values, wherein each subsequent candidate target value is calculated based on a corresponding one of the candidate proof values and a directly previous candidate target value in the sequence of candidate target values.

13. The method of claim 9, wherein the candidate proof is derived based on an intermediate value calculated based on the public key and the puzzle solution.

14. Computer equipment comprising:
memory comprising one or more memory units; and
processing apparatus comprising one or more processing units, wherein the memory stores code arranged to run on the processing apparatus, the code being configured so as when on the processing apparatus to perform the method of any of claims 1 to 13.

15. A computer program embodied on computer-readable storage and configured so as, when run on one or more processors, to perform the method of any of claims 1 to 13.

## Patentansprüche

1. Computerimplementiertes Verfahren zur Erzeugung einer Challenge-Blockchain-Transaktion (502, 602), wobei die Challenge-Blockchain-Transaktion (502, 602) mit einem Rätsel und einem Beweiskriterium assoziiert ist, wobei das Rätsel durch eine Rätsellösung gelöst wird und wobei das Beweiskriterium durch einen Beweis erfüllt wird, wobei das Verfahren Folgendes umfasst:
Erzeugen eines ersten Sperrskripts der Challenge-Blockchain-Transaktion (502, 602), das, wenn es mit einem ersten Entsperrskript einer Lösungs-Blockchain-Transaktion (504, 604, 704, 804, 904) ausgeführt wird, die eine Kandidaten-Rätsellösung, einen öffentlichen Schlüssel, einen Kandidaten-Beweis und eine Signatur umfasst, die für die Lösungs-Blockchain-Transaktion (504, 604, 704, 804, 904) erzeugt wird, zu Folgendem konfiguriert ist:
Überprüfen, ob die Kandidaten-Rätsellösung das Rätsel löst;
Überprüfen, ob die Signatur für den öffentlichen Schlüssel gültig ist; und
Überprüfen, ob der Kandidaten-Beweis das Beweiskriterium erfüllt, wobei das Beweiskriterium erfordert, dass der Kandidaten-Beweis aus der Kandidaten-Rätsellösung und dem öffentlichen Schlüssel abgeleitet wird; und
Verfügbarmachen der Challenge-Blockchain-Transaktion (502, 602) für einen oder mehrere Knoten (104) eines Blockchain-Netzwerks (150).

2. Verfahren nach Anspruch 1, wobei das Beweiskriterium einen Schwellenwert definiert, wobei das Beweiskriterium erfüllt wird, falls ein Kandidaten-Zielwert kleiner oder gleich dem Schwellenwert ist.

3. Verfahren nach Anspruch 2, wobei das erste Sperrskript, wenn es mit dem ersten Entsperrskript ausgeführt wird, ferner dazu konfiguriert ist, den Kandidaten-Zielwert basierend auf dem öffentlichen Schlüssel, der Kandidaten-Rätsellösung und dem Kandidaten-Beweis zu berechnen.

4. Verfahren nach Anspruch 2, wobei der Kandidaten-Beweis eine Folge von Kandidaten-Beweiswerten umfasst, wobei das erste Sperrskript, wenn es mit dem ersten Entsperrskript ausgeführt wird, ferner dazu konfiguriert ist, eine entsprechende Folge von Kandidaten-Zielwerten zu berechnen durch:
Berechnen eines ersten Kandidaten-Zielwerts basierend auf dem öffentlichen Schlüssel, der Kandidaten-Rätsellösung und einem ersten Kandidaten-Beweiswert der Folge von Kandidaten-Beweiswerten; und
mindestens einen nachfolgenden Kandidaten-Zielwert, wobei jeder nachfolgende Kandidaten-Zielwert basierend auf einem entsprechenden der Kandidaten-Beweiswerte und einem unmittelbar vorhergehenden Kandidaten-Zielwert in der Folge von Kandidaten-Zielwerten berechnet wird.

5. Verfahren nach Anspruch 1, wobei der Kandidaten-Beweis durch eine invertierbare Funktion definiert und basierend auf einer Reihe von Quadratwurzelberechnungen berechnet wird, wobei das erste Sperrskript ferner dazu konfiguriert ist, einen Kandidaten-Zielwert zu berechnen, wobei der Kandidaten-Zielwert eine Inverse der invertierbaren Funktion ist.

6. Verfahren nach Anspruch 5, wobei der Kandidaten-Beweis basierend auf einer Zwischenvariable berechnet wird, wobei die Zwischenvariable aus dem öffentlichen Schlüssel und der Kandidaten-Rätsellösung ableitbar ist, wobei das erste Sperrskript ferner dazu konfiguriert ist, die Zwischenvariable basierend auf dem öffentlichen Schlüssel und der Kandidaten-Rätsellösung des ersten Entsperrskripts zu berechnen, wobei das Beweiskriterium erfüllt wird, falls der Kandidaten-Zielwert gleich der berechneten Zwischenvariable ist.

7. Verfahren nach Anspruch 1, wobei das Beweiskriterium einem gerichteten azyklischen Graphen entspricht, wobei der Kandidaten-Beweis einen Satz von Offenlegungen und eine Festlegung umfasst, wobei das erste Sperrskript ferner dazu konfiguriert ist, zu überprüfen, ob der Kandidaten-Beweis des ersten Entsperrskripts für den gerichteten azyklischen Graphen gültig ist.

8. Verfahren nach Anspruch 1, wobei der Kandidaten-Beweis eine Folge von Beweiswerten und einen Ergebniswert umfasst, wobei der Ergebniswert basierend auf einer Folge von Quadrieroperationen berechnet wird, wobei das erste Sperrskript ferner zu Folgendem konfiguriert ist:
Berechnen einer Reihe von ersten Exponentialfunktionen; und
Berechnen einer Reihe von zweiten Exponentialfunktionen; wobei eine erste der Reihe von ersten Exponentialfunktionen basierend auf der Kandidaten-Rätsellösung und dem öffentlichen Schlüssel berechnet wird;
wobei eine erste der Reihe von zweiten Exponentialfunktionen gleich dem Ergebniswert ist;
wobei jede nachfolgende Exponentialfunktion der Reihe von ersten Exponentialfunktionen basierend auf einem entsprechenden Vorhergehenden der Folge von Beweiswerten, einer entsprechenden Vorhergehenden der Reihe von ersten Exponentialfunktionen und einer entsprechenden Vorhergehenden der Reihe von zweiten Exponentialfunktionen berechnet wird; und
wobei anschließend jede Exponentialfunktion der Reihe von zweiten Exponentialfunktionen basierend auf einem entsprechenden Vorherhergehenden der Folge von Beweiswerten, einer entsprechenden Vorhergehenden der Reihe von ersten Exponentialfunktionen und einer entsprechenden Vorherhergehenden der Reihe von zweiten Exponentialfunktionen berechnet wird.

9. Computerimplementiertes Verfahren zur Erzeugung einer Lösungs-Blockchain-Transaktion (504, 604, 704, 804, 904), wobei ein erstes Entsperrskript der Lösungs-Blockchain-Transaktion (504, 604, 704, 804, 904) dazu konfiguriert ist, eine erste Transaktionsausgabe einer Challenge-Blockchain-Transaktion (502, 602) zu entsperren, wobei die Challenge-Blockchain-Transaktion (502, 602) mit einem Rätsel und einem Beweiskriterium assoziiert ist, wobei das Rätsel durch eine Rätsellösung gelöst wird und wobei das Beweiskriterium durch einen Beweis erfüllt wird, wobei das Verfahren Folgendes umfasst:
Erzeugen des ersten Entsperrskripts, wobei das erste Entsperrskript Folgendes umfasst:
eine Kandidaten-Rätsellösung zum Lösen des Rätsels;
eine Signatur der Lösungs-Blockchain-Transaktion;
einen öffentlichen Schlüssel zum Erzeugen der Signatur; und
einen Kandidaten-Beweis, wobei der Kandidaten-Beweis von der Kandidaten-Rätsellösung und dem öffentlichen Schlüssel abgeleitet wird; und
Verfügbarmachen der Lösungs-Blockchain-Transaktion (504, 604, 704, 804, 904) für einen oder mehrere Knoten (104) eines Blockchain-Netzwerks (150).

10. Verfahren nach Anspruch 9, wobei das Beweiskriterium einen Schwellenwert definiert, wobei das Beweiskriterium erfüllt wird, falls ein Kandidaten-Zielwert kleiner oder gleich dem Schwellenwert ist, wobei das Verfahren ferner Bestimmen des Kandidaten-Beweises umfasst, der, wenn er zum Ableiten des Kandidaten-Zielwerts verwendet wird, das Beweiskriterium erfüllt.

11. Verfahren nach Anspruch 10, wobei der Kandidaten-Zielwert basierend auf dem Kandidaten-Beweis, der Kandidaten-Rätsellösung und dem öffentlichen Schlüssel abgeleitet wird.

12. Verfahren nach Anspruch 9, wobei das Beweiskriterium einen Schwellenwert definiert, wobei der Kandidaten-Beweis eine Folge von Kandidaten-Beweiswerten umfasst, wobei das Beweiskriterium erfüllt wird, falls jeder einer Folge von Kandidaten-Zielwerten kleiner oder gleich dem Schwellenwert ist, wobei die Folge von Kandidaten-Zielwerten Folgendes umfasst:
einen ersten Kandidaten-Zielwert, der basierend auf dem öffentlichen Schlüssel, der Kandidaten-Rätsellösung und einem ersten Kandidaten-Beweiswert der Folge von Kandidaten-Beweiswerten berechnet wird; und
mindestens einen nachfolgenden Kandidaten-Zielwert, wobei jeder nachfolgende Kandidaten-Zielwert basierend auf einem entsprechenden der Kandidaten-Beweiswerte und einem unmittelbar vorhergehenden Kandidaten-Zielwert in der Folge von Kandidaten-Zielwerten berechnet wird.

13. Verfahren nach Anspruch 9, wobei der Kandidaten-Beweis basierend auf einem Zwischenwert abgeleitet wird, der basierend auf dem öffentlichen Schlüssel und der Rätsellösung berechnet wird.

14. Computereinrichtung, umfassend:
einen Speicher, der eine oder mehrere Speichereinheiten umfasst; und
eine Verarbeitungsvorrichtung, die eine oder mehrere Verarbeitungseinheiten umfasst, wobei der Speicher Code speichert, der dazu ausgelegt ist, auf der Verarbeitungsvorrichtung ausgeführt zu werden, wobei der Code so konfiguriert ist, dass er, wenn er sich auf der Verarbeitungsvorrichtung befindet, das Verfahren nach einem der Ansprüche 1 bis 13 durchführt.

15. Computerprogramm, das auf einem computerlesbaren Speicher realisiert und so konfiguriert ist, dass es, wenn es auf einem oder mehreren Prozessoren ausgeführt wird, das Verfahren nach einem der Ansprüche 1 bis 13 durchführt.

## Revendications

1. Procédé mis en œuvre par ordinateur pour générer une transaction de chaîne de blocs de défi (502, 602), dans lequel la transaction de chaîne de blocs de défi (502, 602) est associée à un puzzle et à un critère de preuve, le puzzle étant satisfait par une solution de puzzle, et le critère de preuve étant satisfait par une preuve, le procédé comprenant :
la génération d'un premier script de verrouillage de la transaction de chaîne de blocs de défi (502, 602) qui, lorsqu'il est exécuté avec un premier script de déverrouillage d'une transaction de chaîne de blocs de solution (504, 604, 704, 804, 904) comprenant une solution de puzzle candidate, une clé publique, une preuve candidate et une signature générée pour la transaction de chaîne de blocs de solution (504, 604, 704, 804, 904), est configuré pour :
vérifier que la solution de puzzle candidate satisfait au puzzle ;
vérifier que la signature est valide pour la clé publique ; et
vérifier que la preuve candidate satisfait au critère de preuve, dans lequel le critère de preuve exige que la preuve candidate soit dérivée de la solution de puzzle candidate et de la clé publique ; et
la mise de la transaction de chaîne de blocs de défi (502, 602) à la disponibilité d'un ou de plusieurs nœuds (104) d'un réseau de chaînes de blocs (150).

2. Procédé selon la revendication 1, dans lequel le critère de preuve définit une valeur de seuil, le critère de preuve étant satisfait si une valeur cible candidate est inférieure ou égale à la valeur de seuil.

3. Procédé selon la revendication 2, dans lequel le premier script de verrouillage, lorsqu'il est exécuté avec le premier script de déverrouillage, est en outre configuré pour calculer la valeur cible candidate sur la base de la clé publique, de la solution de puzzle candidate et de la preuve candidate.

4. Procédé selon la revendication 2, dans lequel la preuve candidate comprend une séquence de valeurs de preuve candidates, le premier script de verrouillage, lorsqu'il est exécuté avec le premier script de déverrouillage, étant en outre configuré pour calculer une séquence correspondante de valeurs cibles candidates par :
le calcul d'une première valeur cible candidate sur la base de la clé publique, de la solution de puzzle candidate et d'une première valeur de preuve candidate de la séquence de valeurs de preuve candidates ; et
au moins une valeur cible candidate ultérieure, chaque valeur cible candidate ultérieure étant calculée sur la base de l'une correspondante des valeurs de preuve candidates et d'une valeur cible candidate directement antérieure dans la séquence de valeurs cibles candidates.

5. Procédé selon la revendication 1, dans lequel la preuve candidate est définie par une fonction inversible et calculée sur la base d'une série de calculs de racine carrée, le premier script de verrouillage étant en outre configuré pour calculer une valeur cible candidate, la valeur cible candidate étant une inverse de la fonction inversible.

6. Procédé selon la revendication 5, dans lequel la preuve candidate est calculée sur la base d'une variable intermédiaire, la variable intermédiaire pouvant être dérivée de la clé publique et de la solution de puzzle candidate, le premier script de verrouillage étant en outre configuré pour calculer la variable intermédiaire sur la base de la clé publique et de la solution de puzzle candidate du premier script de déverrouillage, le critère de preuve étant satisfait si la valeur cible candidate est égale à la variable intermédiaire calculée.

7. Procédé selon la revendication 1, dans lequel le critère de preuve correspond à un graphe acyclique dirigé, la preuve candidate comprenant un ensemble d'ouvertures et un engagement, le premier script de verrouillage étant en outre configuré pour vérifier que la preuve candidate du premier script de déverrouillage est valide pour le graphe acyclique dirigé.

8. Procédé selon la revendication 1, dans lequel la preuve candidate comprend une séquence de valeurs de preuve et une valeur de résultat, la valeur de résultat étant calculée sur la base d'une séquence d'opérations de mise au carré, le premier script de verrouillage étant en outre configuré pour :
calculer une série de premières exponentielles ; et
calculer une série de secondes exponentielles ;
dans lequel une première de la série de premières exponentielles est calculée sur la base de la solution de puzzle candidate et de la clé publique ;
dans lequel une première de la série de secondes exponentielles est égale à la valeur de résultat ;
dans lequel chaque exponentielle ultérieure de la série de premières exponentielles est calculée sur la base d'une exponentielle précédente correspondante de la séquence de valeurs de preuve, d'une exponentielle précédente correspondante de la série de premières exponentielles et d'une exponentielle précédente correspondante de la série de secondes exponentielles ; et
dans lequel chaque exponentielle ultérieure de la série de secondes exponentielles est calculée sur la base d'une exponentielle précédente correspondante de la séquence de valeurs de preuve, d'une exponentielle précédente correspondante de la série de premières exponentielles et d'une exponentielle précédente correspondante de la série de secondes exponentielles.

9. Procédé mis en œuvre par ordinateur pour générer une transaction de chaîne de blocs de solution (504, 604, 704, 804, 904), dans lequel un premier script de déverrouillage de la transaction de chaîne de blocs de solution (504, 604, 704, 804, 904) est configuré pour déverrouiller une première sortie de transaction d'une transaction de chaîne de blocs de défi (502, 602), la transaction de chaîne de blocs de défi (502, 602) étant associée à un puzzle et à un critère de preuve, le puzzle étant satisfait par une solution de puzzle, et le critère de preuve étant satisfait par une preuve, le procédé comprenant :
la génération du premier script de déverrouillage, le premier script de déverrouillage comprenant :
une solution de puzzle candidate pour satisfaire le puzzle ;
une signature de la transaction de chaîne de blocs de solution ;
une clé publique pour générer la signature ; et
une preuve candidate, la preuve candidate étant dérivée de la solution de puzzle candidate et de la clé publique ; et
la mise de la transaction de chaîne de blocs de solution (504, 604, 704, 804, 904) à la disponibilité d'un ou de plusieurs nœuds (104) d'un réseau de chaînes de blocs (150).

10. Procédé selon la revendication 9, dans lequel le critère de preuve définit une valeur de seuil, le critère de preuve étant satisfait si une valeur cible candidate est inférieure ou égale à la valeur de seuil, le procédé comprenant en outre la détermination de la preuve candidate qui, lorsqu'elle est utilisée pour dériver la valeur cible candidate, satisfait le critère de preuve.

11. Procédé selon la revendication 10, dans lequel la valeur cible candidate est dérivée sur la base de la preuve candidate, de la solution de puzzle candidate et de la clé publique.

12. Procédé selon la revendication 9, dans lequel le critère de preuve définit une valeur de seuil, la preuve candidate comprenant une séquence de valeurs de preuve candidates, le critère de preuve étant satisfait si chacune d'une séquence de valeurs cibles candidates est inférieure ou égale à la valeur de seuil, la séquence de valeurs cibles candidates comprenant :
une première valeur cible candidate calculée sur la base de la clé publique, de la solution de puzzle candidate et d'une première valeur de preuve candidate de la séquence de valeurs de preuve candidates ; et
au moins une valeur cible candidate ultérieure, chaque valeur cible candidate ultérieure étant calculée sur la base de l'une correspondante des valeurs de preuve candidates et d'une valeur cible candidate directement antérieure dans la séquence de valeurs cibles candidates.

13. Procédé selon la revendication 9, dans lequel la preuve candidate est dérivée sur la base d'une valeur intermédiaire calculée sur la base de la clé publique et de la solution de puzzle.

14. Équipement d'ordinateur comprenant :
une mémoire comprenant une ou plusieurs unités de mémoire ; et
un appareil de traitement comprenant une ou plusieurs unités de traitement, la mémoire stockant un code agencé pour être exécuté sur l'appareil de traitement, le code étant configuré, lorsqu'il est sur l'appareil de traitement, afin d'exécuter le procédé selon l'une quelconque des revendications 1 à 13.

15. Programme d'ordinateur incorporé sur un stockage lisible par ordinateur et configuré, lorsqu'il est exécuté sur un ou plusieurs processeurs, afin d'exécuter le procédé selon l'une quelconque des revendications 1 à 13.
